(19) Europäisches Patentamt
European Patent Office
Office européen des brevets

(11) **EP 4 783 634 A1**

(12) **EUROPEAN PATENT APPLICATION**
published in accordance with Art. 153(4) EPC

(43) Date of publication:
**29.07.2026 Bulletin 2026/31**

(21) Application number: **23952659.3**

(22) Date of filing: **21.09.2023**

(51) International Patent Classification (IPC):
**H04W 12/041** $^{(2021.01)}$

(52) Cooperative Patent Classification (CPC):
**H04W 12/041**

(86) International application number:
**PCT/CN2023/120490**

(87) International publication number:
**WO 2025/060003 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **GAN, Lu**
  **Dongguan, Guangdong 523860 (CN)**
• **LIU, Xuefeng**
  **Dongguan, Guangdong 523860 (CN)**
• **GONG, Dan**
  **Dongguan, Guangdong 523860 (CN)**
• **LIU, Wenya**
  **Dongguan, Guangdong 523860 (CN)**
• **SHI, Cong**
  **Dongguan, Guangdong 523860 (CN)**

(74) Representative: **Mewburn Ellis LLP
Aurora Building
Counterslip
Bristol BS1 6BX (GB)**

(54) **COMMUNICATION METHOD AND DEVICE**

(57) This disclosure relates to a communication method, a device, a computer-readable storage medium, a computer program product, and a computer program. The method includes the following. A group request message is sent to a first serving node, where the group request message carries a group parameter, and the group parameter is calculated based on identifiers of multiple target devices. A group response message is received from the first serving node, where the group response message carries a private key corresponding to the group parameter.

SEND GROUP REQUEST MESSAGE TO FIRST SERVING NODE, WHERE GROUP REQUEST MESSAGE CARRIES GROUP PARAMETER, AND GROUP PARAMETER IS CALCULATED BASED ON IDENTIFIERS OF MULTIPLE TARGET DEVICES — S210

RECEIVE GROUP RESPONSE MESSAGE FROM FIRST SERVING NODE, WHERE GROUP RESPONSE MESSAGE CARRIES PRIVATE KEY CORRESPONDING TO GROUP PARAMETER — S220

FIG. 2

## Description

TECHNICAL FIELD

This disclosure relates to the field of communication, and more specifically to a communication method, a device, a computer-readable storage medium, a computer program product, and a computer program.

BACKGROUND

With the development of technology, there is a need for communication between an internet of things (IoT) device (or group) or a zero-power device (or group) and a network-side device or another IoT device (or zero-power device). To realize communication, authentication needs to be completed for the IoT device (or group) or the zero-power device (or group). A private key related to a zero-power group or IoT group needs to be used during authentication for the zero-power group or IoT group, or a private key related to a single IoT device (or zero-power device) also needs to be used during authentication for the single IoT device or zero-power device. However, how to ensure the generation efficiency and security of a private key has become a problem to be solved.

SUMMARY

A communication method, a device, a computer-readable storage medium, a computer program product, and a computer program are provided in embodiments of the disclosure.

A communication method performed by a first device is provided in embodiments of the disclosure. The method includes the following. A group request message is sent to a first serving node, where the group request message carries a group parameter, and the group parameter is calculated based on identifiers of multiple target devices. A group response message is received from the first serving node, where the group response message carries a private key corresponding to the group parameter.

A communication method performed by a first serving node is provided in embodiments of the disclosure. The method includes the following. A group request message is received from a first device, where the group request message carries a group parameter. A private key corresponding to the group parameter is calculated based on the group parameter. A group response message is sent to the first device, where the group response message carries the private key corresponding to the group parameter.

A communication method performed by a second device is provided in embodiments of the disclosure. The method includes the following. A first request message is sent to a second serving node, where the first request message carries an identifier of the second device. A first response message is received from the second serving node, where the first response message carries a private key corresponding to the second device, and the private key corresponding to the second device is obtained based on the identifier of the second device.

A communication method performed by a second serving node is provided in embodiments of the disclosure. The method includes the following. A first request message is received from a second device, where the first request message carries an identifier of the second device. A private key corresponding to the second device is calculated with a second federated node based on the identifier of the second device. A first response message is sent to the second device, where the first response message carries the private key corresponding to the second device.

A communication method performed by a second serving node is provided in embodiments of the disclosure. The method includes the following. A second request message is sent to an issuing node. A second response message is received from the issuing node, where the second response message carries information of a location of a certificate of the second serving node on a blockchain.

A communication method performed by an issuing node is provided in embodiments of the disclosure. The method includes the following. A second request message is received from a second serving node. A certificate of the second serving node is generated. The certificate of the second serving node is uploaded to a blockchain, to obtain information of a location of the certificate of the second serving node on the blockchain. A second response message is sent to the second serving node, where the second response message carries the information of the location of the certificate of the second serving node on the blockchain.

A first device is provided in embodiments of the disclosure. The first device includes a first communication unit. The first communication unit is configured to send a group request message to a first serving node, where the group request message carries a group parameter, and the group parameter is calculated based on identifiers of multiple target devices; and receive a group response message from the first serving node, where the group response message carries a private key corresponding to the group parameter.

A first serving node is provided in embodiments of the disclosure. The first serving node includes a second communication unit and a second processing unit. The second communication unit is configured to receive a group request message from a first device, where the group request message carries a group parameter; and send a group response message to the first device, where the group response message carries a private key corresponding to the group parameter. The second processing unit is configured to calculate the private key corresponding to the group parameter based on the group parameter.

A second device is provided in embodiments of the disclosure. The second device includes a third communication unit. The third communication unit is configured to send a first request message to a second serving node, where the first request message carries an identifier of the second device; and receive a first response message from the second serving node, where the first response message carries a private key corresponding to the second device, and the private key corresponding to the second device is obtained based on the identifier of the second device.

A second serving node is provided in embodiments of the disclosure. The second serving node includes a fourth communication unit and a fourth processing unit. The fourth communication unit is configured to receive a first request message from a second device, where the first request message carries an identifier of the second device; and send a first response message to the second device, where the first response message carries a private key corresponding to the second device. The fourth processing unit is configured to calculate the private key corresponding to the second device with a second federated node based on the identifier of the second device.

A second serving node is provided in embodiments of the disclosure. The second serving node includes a fourth communication unit. The fourth communication unit is configured to send a second request message to an issuing node; and receive a second response message from the issuing node, where the second response message carries information of a location of a certificate of the second serving node on a blockchain.

An issuing node is provided in embodiments of the disclosure. The issuing node includes a fifth communication unit and a fifth processing unit. The fifth communication unit is configured to receive a second request message from a second serving node; upload a certificate of the second serving node to a blockchain, to obtain information of a location of the certificate of the second serving node on the blockchain; and send a second response message to the second serving node, where the second response message carries the information of the location of the certificate of the second serving node on the blockchain. The fifth processing unit is configured to generate the certificate of the second serving node.

A first device is provided in embodiments of the disclosure. The first device includes a transceiver, a processor, and a memory. The memory is configured to store a computer program, and the processor is configured to invoke and execute the computer program stored in the memory, to cause the first device to perform the above method.

A first serving node is provided in embodiments of the disclosure. The first serving node includes a transceiver, a processor, and a memory. The memory is configured to store a computer program, and the processor is configured to invoke and execute the computer program stored in the memory, to cause the first serving node to perform the above method.

A second device is provided in embodiments of the disclosure. The second device includes a transceiver, a processor, and a memory. The memory is configured to store a computer program, and the processor is configured to invoke and execute the computer program stored in the memory, to cause the second device to perform the above method.

A second serving node is provided in embodiments of the disclosure. The second serving node includes a transceiver, a processor, and a memory. The memory is configured to store a computer program, and the processor is configured to invoke and execute the computer program stored in the memory, to cause the second serving node to perform the above method.

An issuing node is provided in embodiments of the disclosure. The issuing node includes a transceiver, a processor, and a memory. The memory is configured to store a computer program, and the processor is configured to invoke and execute the computer program stored in the memory, to cause the issuing node to perform the above method.

A chip is provided in embodiments of the disclosure. The chip is configured to implement the above method.

Specifically, the chip includes a processor. The processor is configured to invoke and execute a computer program stored in a memory, to cause a device equipped with the chip to perform the above method.

A computer-readable storage medium is provided in embodiments of the disclosure. The computer-readable storage medium is configured to store a computer program which, when executed by a device, causes the device to perform the above method.

A computer program product is provided in embodiments of the disclosure. The computer program product includes computer program instructions which cause a computer to perform the above method.

A computer program is provided in embodiments of the disclosure. The computer program, when executed by a computer, causes the computer to perform the above method.

By using the communication method provided in the embodiments, a first device can send a group parameter related to multiple target devices to a serving node, so that the serving node calculates a private key based on the group parameter related to the multiple target devices. As such, a corresponding private key can be distributed through a proxy at one time to a group where the multiple target devices are located, thereby improving the generation and management efficiency of the private key. In addition, since the private key is generated or distributed based on the group parameter, as long as an attacker is unable to obtain an identifier of each target device, the attacker is unable to obtain the group parameter, and thus is unable to obtain the private key corresponding to the group parameter, thereby ensuring the security of the private key corresponding to the group parameter. Furthermore, since the target device does not need to add any storage content during the whole processing, the storage space of the target device can be saved, and the storage cost of the target device can be reduced.

BRIEF DESCRIPTION OF THE DRAWINGS

FIG. 1 is a schematic diagram of an application scenario according to embodiments of the disclosure.

FIG. 2 is a schematic flowchart of a communication method according to an embodiment of the disclosure.

FIG. 3 is a schematic flowchart of a communication method according to another embodiment of the disclosure.

FIGs. 4a and 4b are two schematic diagrams illustrating a scenario of a Merkle tree structure according to an embodiment of the disclosure.

FIG. 5 is a schematic flowchart of a communication method according to an embodiment of the disclosure.

FIG. 6 is a schematic flowchart of a communication method according to another embodiment of the disclosure.

FIG. 7 is a schematic flowchart of a communication method according to yet another embodiment of the disclosure.

FIG. 8 is a schematic flowchart of a communication method according to still another embodiment of the disclosure.

FIG. 9 is a schematic diagram illustrating a scenario of a dual-layer identity architecture of a blockchain according to an embodiment of the disclosure.

FIG. 10 is a schematic flowchart of a communication method according to an embodiment of the disclosure.

FIG. 11 is a schematic flowchart of a communication method according to another embodiment of the disclosure.

FIG. 12 is a schematic flowchart of a communication method according to yet another embodiment of the disclosure.

FIG. 13 is a schematic block diagram of a first device according to an embodiment of the disclosure.

FIG. 14 is a schematic block diagram of a first serving node according to an embodiment of the disclosure.

FIG. 15 is a schematic block diagram of a second device according to an embodiment of the disclosure.

FIG. 16 is a schematic block diagram of a second serving node according to an embodiment of the disclosure.

FIG. 17 is a schematic block diagram of an issuing node according to an embodiment of the disclosure.

FIG. 18 is a schematic block diagram of a communication device according to an embodiment of the disclosure.

FIG. 19 is a schematic block diagram of a chip according to embodiments of the disclosure.

FIG. 20 is a schematic block diagram of a communication system according to embodiments of the disclosure.

DETAILED DESCRIPTION

The technical solutions of embodiments of the disclosure are applicable to various communication systems, for example, a long-term evolution (LTE), an advanced LTE (LTE-A), a new radio (NR), an evolved NR, a wireless local area network (WLAN), a wireless fidelity (WiFi), or other communication systems.
Various embodiments of the disclosure are described in connection with a network device and a terminal. The terminal may be mobile or fixed, and may also be referred to as a mobile station, a subscriber unit, etc. The terminal may be a station in a WLAN, an intelligent terminal, a wireless modem, a pad, a laptop computer, etc. In embodiments of the disclosure, the terminal may be a virtual reality (VR) terminal/an augmented reality (AR) terminal, a terminal in industrial control, a terminal in self-driving, a terminal in remote medicine, a terminal in smart grid, a terminal in transportation safety, a terminal in smart city, a wireless terminal in smart home, etc. By way of explanation rather than limitation, in embodiments of the disclosure, the terminal may also be a wearable device.
In embodiments of the disclosure, the network device may be a device configured to communicate with the terminal, and the network device may be an access point (AP) in a WLAN, or may be an evolutional Node B (eNB or eNodeB) in LTE, or a relay station, or an in-vehicle device, a wearable device, a network device (gNB) in an NR network, a network device in a future evolved public land mobile network (PLMN), a network device in a non-terrestrial network, etc. By way of explanation rather than limitation, in embodiments of the disclosure, the network device may be mobile. For example, the network device may be a mobile device.

It may be understood that, the terms "system" and "network" herein are usually used interchangeably throughout this disclosure. The term "and/or" herein only describes an association between associated objects, and indicates that there may be three relationships, for example, A and/or B may mean A alone, both A and B exist, and B alone. In addition, the character "/" herein can indicate that the associated objects are in an "or" relationship. It can be understood that, "indication" referred to in embodiments of the disclosure may be a direct indication, may be an indirect indication, or may mean that there is an association. For example, A indicates B may mean that A directly indicates B, for instance, B may be obtained according to A, may mean that A indirectly indicates B, for instance, A indicates C, and B may be obtained according to C, or may mean that there is an association between A and B. In the elaboration of embodiments of the disclosure, the term "correspondence" may mean that there is a direct or indirect correspondence between the two, may mean that there is an association between the two, may mean a relationship of indicating and being indicated or configuring and being configured, etc.

To facilitate understanding of the technical solutions of embodiments of the disclosure, the related art of embodiments of the disclosure will be described below. The following related art, as an optional solution, may be arbitrarily combined with the technical solutions of embodiments of the disclosure, which shall all belong to the protection scope of embodiments of the disclosure.

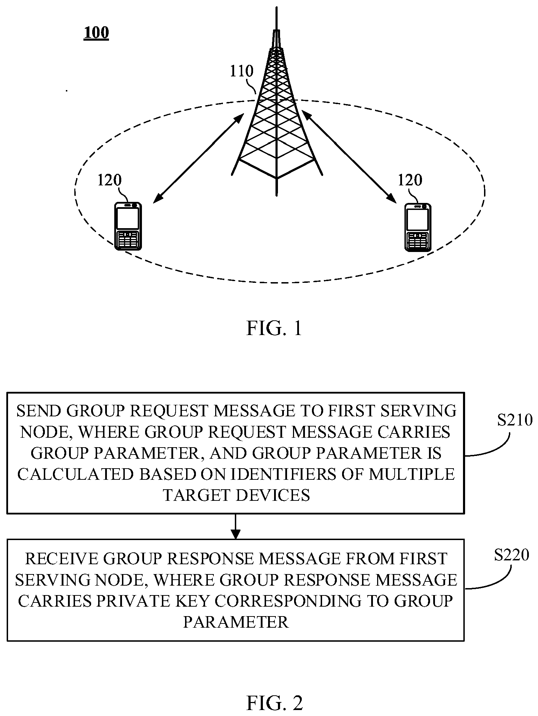

FIG. 1 exemplarily illustrates a communication system 100. The communication system 100 includes one network device 110 and two terminals 120. In a possible embodiment, the communication system 100 may include multiple network devices 110, and there may be other quantities of terminals 120 in the coverage of each network device 110, which is not limited in embodiments of the disclosure. In a possible embodiment, the communication system 100 may also include other network entities such as a mobility management entity (MME), an access and mobility management function (AMF), etc., which is not limited in embodiments of the disclosure. The network device may also include an access-network device and a core-network device. That is, the communication system may further include multiple core networks for communication with the access-network device. The access-network device may be a base station in LTE, LTE-A, or an NR system. Taking the communication system illustrated in FIG. 1 as an example, a communication device may include the network device and the terminal(s) that have communication functions. The communication device may further include other devices such as a network controller, an MME, or other network entities in the communication system, which is not limited in embodiments of the disclosure.

FIG. 2 is a schematic flowchart of a communication method performed by a first device according to an embodiment of the disclosure. The method includes at least part of the following contents.

At S210, a group request message is sent to a first serving node, where the group request message carries a group parameter, and the group parameter is calculated based on identifiers of multiple target devices.

At S220, a group response message is received from the first serving node, where the group response message carries a private key corresponding to the group parameter.

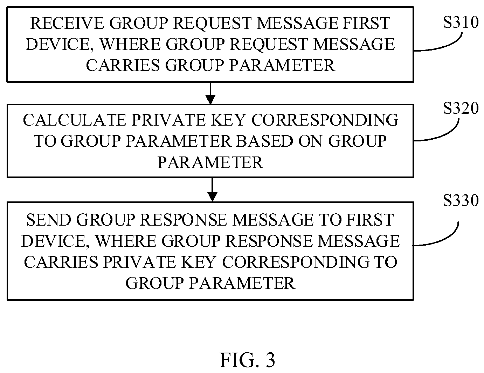

FIG. 3 is a schematic flowchart of a communication method performed by a first serving node according to another embodiment of the disclosure. The method includes at least part of the following contents.

At S310, a group request message is received from a first device, where the group request message carries a group parameter.

At S320, a private key corresponding to the group parameter is calculated based on the group parameter.

At S330, a group response message is sent to the first device, where the group response message carries the private key corresponding to the group parameter.

The first device may be alternatively referred to as a proxy device, a proxy node, a proxy, or the like, and all possible names of the first device will not be exhaustively listed and limited herein. The first device includes one of: a terminal and an access-network device. Optionally, the first device is an access-network device, and the access-network device may be any one of: a base station, a gNB, an eNB, an integrated access backhaul (IAB) node, and the like. Optionally, the first device is a terminal, and the terminal may be a terminal having a certain calculation capability. In some possible examples, the terminal may be a normal terminal. In some other possible examples, the terminal may be an internet of things (IoT) device having a certain processing capability. Herein, all possible types of the terminal will not be exhaustively listed.

A target device includes one of: a zero-power device and an IoT device. The number (quantity) of the multiple target devices is not limited in this embodiment.

In some embodiments, any one of the target devices may be any one of: an ambient power-enabled IoT (AIoT) device, an active zero-power device, a passive zero-power device, a semi-passive zero-power device, and the like. In some embodiments, any one of the target devices may also be a terminal with a relatively low arithmetic capability. In some possible embodiments, any one of the target devices may be referred to as a tag. All possible names or possible device types of the target device will not be exhaustively listed herein.

In some embodiments, the first device is a terminal, and in such embodiments, the first device may communicate with any one of the target devices through transmission of a sidelink message. In some embodiments, the first device may be an access-network device, and in such embodiments, the first device may communicate with any one of the target devices through transmission of an access stratum (AS) message.

In some possible embodiments, the first device obtains the identifiers of the multiple target devices, and the identifiers of the multiple target devices are used for generating or calculating the group parameter.

In some embodiments, the multiple target devices are all devices in the same group managed by the first device. In this case, the first device may obtain an identifier of each of the target devices in advance. How the first device obtains the identifier of each of the target devices in advance is not limited in this embodiment.

The identifier may be represented as an ID. The identifier may include, but is not limited to, at least one of: a factory identifier, a factory unique identifier, an identifier issued by an operator, an identifier issued by a service provider, a subscription permanent identifier (SUPI), a subscription concealed identifier (SUCI), a permanent equipment identifier (PEI), a 5G globally unique temporary identifier (5G-GUTI), an internal-group identifier (IGI), a generic public subscription identifier (GPSI), a network identifier, or the like. The network identifier may include at least one of an internet protocol address (IP address), a media access control (MAC) address, or the like.

In some embodiments, an identifier of each target device among the multiple target devices is sent by the target device to the first device.

Specifically, the processing by each target device may include: sending a registration request to the first device, where the registration request carries an identifier of the target device. Accordingly, before the first device sends the group request message to the first serving node, the method may further include the following. A registration request is received from each target device among the multiple target devices, where the registration request of the target device carries an identifier of the target device.

In this embodiment, each target device among multiple target devices in a group may send the registration request to the first device based on a registration time configured. The registration time may be alternatively referred to as a time of sending the registration request, or may be alternatively referred to as a registration initiation time, and so on, which will not be exhaustively listed herein. A manner of configuring the registration time for each target device is not limited in this embodiment.

Optionally, each target device may correspond to the same registration time.

Optionally, each target device may correspond to a different registration time. For example, a specified time period contains a registration time corresponding to each target device, and different target devices may correspond to different registration times. The specified time period may be configured according to an actual situation, for example, within 10 minutes, within 5 minutes, or within a specified start moment and a specified duration (or between a specified start moment and a specified end moment), etc.

The first device may receive the registration request from each target device among the multiple target devices as follows. The registration request is received from each target device among the multiple target devices in a specified time period. That is to say, the first device may continuously monitor or continuously receive the registration request from the target device in the specified time period until the end of this time period. In this case, the first device performs subsequent registration processing for a target device that has sent the registration request in the specified time period.

In some possible embodiments, the group parameter is calculated based on the identifiers of the multiple target devices.

In an embodiment, the group parameter is calculated by the first device based on the identifiers of the multiple target devices.

In this embodiment, the first device may calculate the group parameter as follows. A parameter value of each target device among the multiple target devices is calculated based on an identifier of the target device. The group parameter is calculated based on the parameter value of the target device.

The parameter value of each target device among the multiple target devices may be calculated based on the identifier of the target device as follows. The identifier of each target device among the multiple target devices is stored in each leaf node, the parameter value of the target device is calculated based on the identifier of the target device stored in the leaf node, and the parameter value of the target device is stored in a parent node of a corresponding leaf node. The group parameter may be calculated based on the parameter value of the target device as follows. The group parameter is calculated based on a parameter value stored in a parent node of each leaf node, and the group parameter is stored in a root node.

That is, a Merkle tree is constructed at a first device side based on the identifier of each target device. Each leaf node of the Merkle tree corresponds to or stores an identifier of each respective target device, and a root node Root of the Merkle tree corresponds to the group parameter.

Storing the identifier of each target device among the multiple target devices in each leaf node may refer to: storing identifiers of different target devices in different leaf nodes respectively. For example, if there are a total of K target devices, an identifier of the i-th target device among the $K$ target devices is stored in the i-th leaf node among $K$ leaf nodes, where $K$ is an integer greater than or equal to 2, and i is an integer greater than or equal to 1 and less than or equal to $K$ (or $i$ is an integer greater than or equal to 0 and less than or equal to $K$-1).

It may be noted that in the Merkle tree, any node may be a parent node of a corresponding lower-level node as long as the node has the corresponding lower-level node, and accordingly, any node may be a child node of a corresponding upper-level node as long as the node has the corresponding upper-level node. Further, there may be multiple intermediate nodes in the Merkle tree. Any intermediate node refers to a node having a parent node and a child node, and the number of child nodes corresponding to the intermediate node may be one or more. When a lower-level child node of a certain intermediate node is a leaf node, the certain intermediate node corresponds to only one child node. When a lower-level child node of a certain intermediate node is not a leaf node, the certain intermediate node may correspond to multiple child nodes. That is to say, there is only one-to-one correspondence between the leaf node and a parent node corresponding to the leaf node in the Merkle tree. Therefore, in the following, in order to distinguish the intermediate nodes, an intermediate node corresponding to only one leaf node is fixedly referred to as a parent node of the leaf node, and an intermediate node(s) except the parent node of the leaf node is still referred to as an intermediate node(s). That is, all intermediate nodes mentioned below exclude the parent node of the leaf node, which will not be repeatedly explained below.

Calculating the parameter value of the target device based on the identifier of the target device stored in the leaf node, and storing the parameter value of the target device in the parent node of the corresponding leaf node may refer to: obtaining a hash value of the $i$-th target device by performing hash calculation on an identifier of the $i$-th target device stored in the $i$-th leaf node, and determining the hash value of the $i$-th target device as a parameter value of the $i$-th target device; and storing the parameter value of the $i$-th target device in a parent node of the $i$-th leaf node. The $i$-th leaf node is only one child node of the parent node of the $i$-th leaf node.

Calculating the group parameter based on the parameter value stored in the parent node of each leaf node, and storing the group parameter in the root node may refer to: calculating a parameter value of each intermediate node based on a parameter value of the target device stored in the parent node of the leaf node until the group parameter is calculated, and storing the group parameter in the root node.

Specifically, in the Merkle tree, except the parent node of the leaf node, each intermediate node corresponds to multiple child nodes, and different intermediate nodes correspond to different child nodes respectively. The parameter value may be a hash value, i.e., any intermediate node is configured to store a hash value of contents of corresponding child nodes.

For example, any intermediate node is intermediate node $j$, where $j$ is an integer greater than or equal to 0, or $j$ is an integer greater than or equal to 1. The parameter value of the intermediate node may be calculated based on the parameter value of the target device stored in the parent node of the leaf node as follows. When each child node among multiple child nodes corresponding to intermediate node $j$ is a parent node of each respective leaf node, a parameter value stored in the parent node of each leaf node corresponding to intermediate node $j$ is obtained, the $j$-th first value is obtained by performing summation on the parameter value stored in the parent node of each leaf node, the $j$-th hash value is obtained by performing hash calculation on the $j$-th first value, and the $j$-th hash value is determined as a parameter value of intermediate node $j$. When each child node among multiple child nodes corresponding to intermediate node $j$ is not a parent node of a leaf node, a parameter value stored in each child node corresponding to intermediate node $j$ is obtained, the $j$-th second value is obtained by performing summation on the parameter value stored in each child node, the $j$-th hash value is obtained by performing hash calculation on the $j$-th second value, and the $j$-th hash value is determined as a parameter value of intermediate node $j$.

The multiple child nodes corresponding to intermediate node $j$ may be determined as follows. Multiple lower-level adjacent child nodes of intermediate node $j$ are determined as the multiple child nodes corresponding to intermediate node $j$. The term "adjacent" may refer to adjacency in numbering, logical adjacency, or adjacency determined based on a default rule, which is not limited in this embodiment. As long as all child nodes corresponding to intermediate node $j$ that are finally determined are different from all child nodes corresponding to another intermediate node, it falls within the protection scope of this embodiment.

The root node may be a node that has no upper-level parent node in the Merkle tree. The root node may correspond to multiple child nodes (i.e., multiple lower-level child nodes of the root node), and each of the multiple child nodes is not a leaf node. In this case, the content of any child node corresponding to the root node is a parameter value (i.e., a hash value) stored in that child node, and the group parameter stored in the root node may be obtained by performing summation on a parameter value stored in each child node corresponding to the root node and then performing hash calculation. Specifically, the group parameter may be calculated as follows. A parameter value stored in each child node among the multiple child nodes corresponding to the root node is obtained. A third value is obtained by performing summation on the parameter value stored in each child node corresponding to the root node, and a third hash value is obtained by performing hash calculation on the third value. The third hash value is determined as the group parameter.

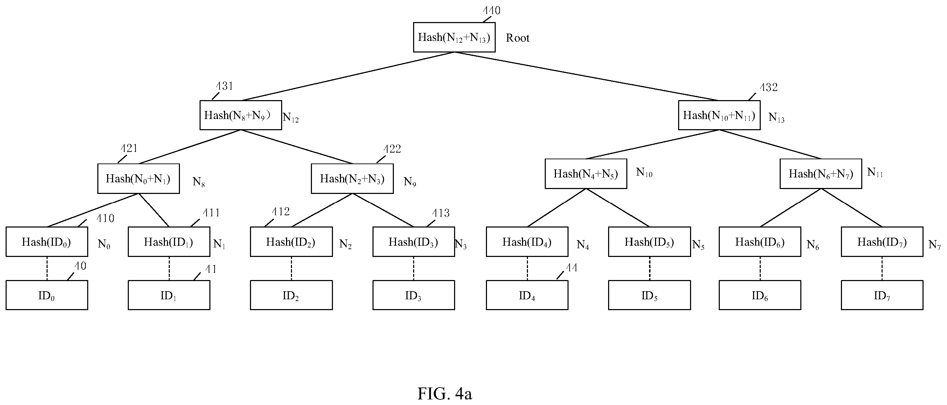

In a possible example, a Merkle tree structure is a binary tree structure, and thus, any intermediate node except a parent node of a leaf node may correspond to two child nodes. With reference to FIG. 4a, for example, in FIG. 4a, there are eight leaf nodes respectively corresponding to eight target devices in a group, and each of the eight leaf nodes is used for storing an ID of a respective target device. For example, $ID_1$ of target device 1 is stored in leaf node 41, and the illustration of other leaf nodes will not be repeated. In FIG. 4a, leaf node 41 corresponds to only one parent node 411, and accordingly, a parameter value stored in parent node 411 of leaf node 41 is a hash value $Hash(ID_1)$ calculated based on $ID_1$ in leaf node 41. For example, the hash value stored in parent node 411 of leaf node 41 may be represented as $N_1$. A calculation manner of a parameter value stored in a parent node (for example, node 410, node 412, node 413, or the like, which is a parent node of a certain leaf node, and will not be exhaustively listed herein) of another leaf node at the same level as parent node 411 of leaf node 41 is the same as that of the parameter value stored in parent node 411 of leaf node 41, which will not be repeated herein. A lower-level child node of intermediate node 422 is not a leaf node. There are two corresponding child nodes at the lower level of intermediate node 422, namely child node 412 and child node 413. A parameter value stored in intermediate node 422 is a hash value $Hash(N_2 +N_3)$ obtained by performing summation based on a hash value ($N_2$) of child node 412 and a hash value ($N_3$) of child node 413 and then performing hash calculation. The hash value (i.e., the parameter value) stored in intermediate node 422 may be represented as $N_9$. A calculation manner of a parameter value stored in each of other intermediate nodes (for example, intermediate node 412, intermediate node 431, intermediate node 432, and the like, which will not be exhaustively listed herein) in FIG. 4a is the same as that of the parameter value stored in intermediate node 422, which will not be repeated herein. There are two corresponding child nodes at the lower level of root node 440, namely child node 431 and child node 432. A group parameter (i.e., Root illustrated in FIG. 4a) stored in root node 440 is equal to a hash value $Hash(N_{12}+N_{13})$ obtained by performing summation on a hash value ($N_{12}$) of child node 431 and a hash value ($N_{13}$) of child node 432 and then performing hash calculation. The above is merely taken as an example for illustration of some nodes in FIG. 4a. In actual processing, a calculation manner of the content stored in each node at each level in this Merkle tree is similar to that in the above example, and thus will not be repeated herein.

In some possible examples, the above group parameter may be alternatively referred to as a federated identity, federated identity information, Root, a root node value, root node value Root, or the like, which will not be repeatedly explained below.

In some embodiments, the group parameter is calculated based on an identifier of the first device and the identifiers of the multiple target devices.

The first device may calculate the group parameter as follows. A parameter value of each target device among the multiple target devices is calculated based on an identifier of the target device, and the group parameter is calculated based on the parameter value of the target device. The group parameter is calculated based on the parameter value of the target device as follows. The group parameter is calculated based on the parameter value of the target device and the identifier of the first device.

That is, in this embodiment, the first device may calculate the group parameter as follows. A parameter value of each target device among the multiple target devices is calculated based on an identifier of the target device. The group parameter is calculated based on the parameter value of the target device and the identifier of the first device.

In an embodiment, the identifier of the first device is added during calculation of the group parameter.

In this embodiment, a Merkle tree is constructed at a first device side based on the identifier of the first device and the identifier of each target device. Each leaf node of the Merkle tree is used for storing an identifier of each respective target device, and a root node Root of the Merkle tree corresponds to a group parameter for identities (i.e., a federated identity) of all target devices and the first device.

A specific processing manner of calculating the parameter value of each target device among the multiple target devices based on the identifier of the target device is the same as that in the above embodiments.

Exemplarily, the group parameter may be calculated based on the parameter value of the target device and the identifier of the first device as follows. A parameter value of each intermediate node is calculated based on a parameter value of each target device stored in a parent node of each leaf node until a parameter value stored in each child node corresponding to a root node is calculated, a third value is obtained by performing summation on the parameter value stored in each child node corresponding to the root node, and a third hash value is obtained by performing hash calculation on the third value. A fourth hash value is obtained by performing hash calculation on the identifier of the first device, and the group parameter is obtained by performing summation on the third hash value and the fourth hash value. The group parameter is stored in the root node.

Exemplarily, the group parameter may be calculated based on the parameter value of the target device and the identifier of the first device as follows. A parameter value of each intermediate node is calculated based on a parameter value of each target device stored in a parent node of each leaf node until a parameter value stored in each child node corresponding to a root node is calculated, and the parameter value stored in each child node among multiple child nodes corresponding to the root node is obtained. A fourth value is obtained by performing summation on the parameter value stored in each child node corresponding to the root node and the identifier of the first device, and the group parameter is obtained by performing hash calculation on the fourth value. The group parameter is stored in the root node.

In this embodiment, except that the group parameter in the root node is different from that in the above embodiments, the related illustration of both the leaf node and the intermediate node is the same as that in the above embodiments, and thus will not be repeated herein.

In an embodiment, the identifier of the first device is added to a Merkle tree as a leaf node. That is, a Merkle tree is constructed at a first device side based on the identifier of the first device and the identifier of each target device. Each leaf node of the Merkle tree is used for storing an identifier of each respective target device and the identifier of the first device, and a root node Root of the Merkle tree corresponds to a group parameter for all target devices and the first device.

Specifically, the parameter value of each target device among the multiple target devices may be calculated based on the identifier of the target device, and the group parameter may be calculated based on the parameter value of the target device and the identifier of the first device as follows. The identifier of each target device among the multiple target devices is stored in a corresponding leaf node, the parameter value of the target device is calculated based on the identifier of the target device, and the parameter value of the target device is stored in a parent node of the corresponding leaf node. Further, the identifier of the first device is stored in a corresponding leaf node, a parameter value of the first device is calculated based on the identifier of the first device, and the parameter value of the first device is stored in a parent node of the corresponding leaf node. The group parameter is calculated based on a parameter value stored in a parent node of each leaf node, and the group parameter is stored in the root node.

In this embodiment, except for the addition of a leaf node for storing the identifier of the first device, both a calculation manner of a parameter value stored in a parent node of any other leaf node and a calculation manner of a parameter value stored in any intermediate node are the same as those in the above embodiments, and thus will not be repeated. Similarly, the group parameter in the root node is still obtained by performing summation on a parameter value stored in each child node corresponding to the root node and then performing hash calculation, which will also not be repeated.

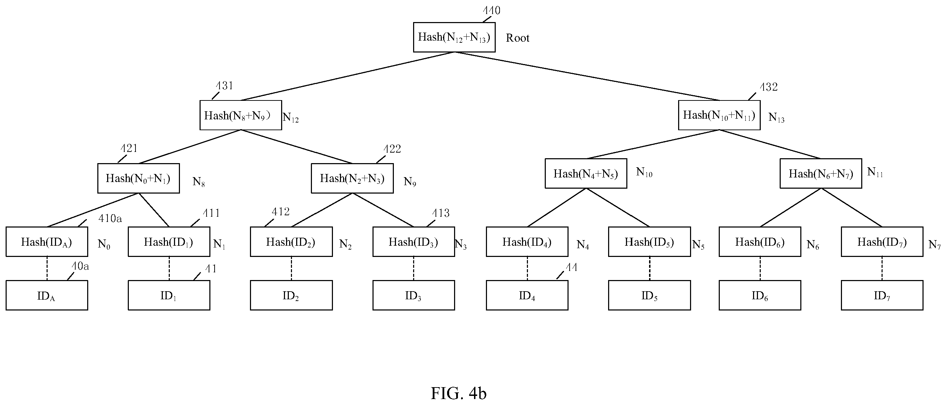

With reference to FIG. 4b, for example, there are eight leaf nodes in FIG. 4b, where one leaf node corresponds to an ID of the first device, the remaining seven leaf nodes respectively correspond to seven target devices in a group, and each of the seven leaf nodes is used for storing an ID of a respective target device in the group. For example, $ID_A$ of the first device is stored in leaf node 40a, and $ID_1$ of target device 1 is stored in leaf node 41. Except for leaf node 40a different from that in FIG. 4a, the related illustration of other leaf nodes is similar to that in FIG. 4a, and thus will not be repeated. In FIG. 4b, leaf node 40a corresponds to only one parent node 410a, and accordingly, a parameter value stored in parent node 410a of leaf node 40a is a hash value $Hash(ID_A)$ calculated based on $ID_A$ in leaf node 40a. For example, the hash value stored in parent node 410a of leaf node 40a may be represented as $N_0$. The related illustration of other intermediate nodes and root node 440 is similar to the related illustration in FIG. 4a, and thus will not be repeated.

For example, the first device is a proxy device, any target device is a zero-power device, and all target devices form a zero-power device group. Since the zero-power device does not have a calculation capability for executing various algorithms in cryptography, an IoT terminal, a terminal, or an access-network device (assuming that proxy device A is delegated, referred to as proxy A for short hereinafter) with the calculation capability is delegated to manage a private key and perform identity authentication for the zero-power device group. In addition, it is also assumed that the capability of proxy A is not limited (i.e., proxy A has the capability of searching for a certificate on a blockchain and verifying whether an identity of the other party in communication has been revoked). Due to the excessively large scale of the zero-power group, a Merkle tree is used for managing an identity of the zero-power device group. By using the above solution, an identity $ID_A$ of proxy A can be bound with identities $ID_1......ID_7$ of all devices in the zero-power device group to serve as leaf nodes of the Merkle tree, and a final root node Root is used as federated identity information (i.e., a group parameter) of the zero-power device group. Therefore, after the solution provided in the embodiments is performed, the proxy device can obtain a private key (a private key corresponding to the group parameter) corresponding to a federated identity (i.e., Root) shared by all zero-power devices.

In an embodiment, the group parameter may be calculated by another device based on the identifiers of the multiple target devices. In this case, the first device may obtain the group parameter from the another device. A specific manner of obtaining the group parameter by the first device is not limited in this embodiment. The another device may have at least calculation and communication functions. The calculation of the group parameter by the another device is the same as the above processing, which will not be repeated.

In some possible embodiments, the first device may carry the group parameter in the group request message and send the group request message to the first serving node, so that the first serving node generates the private key corresponding to the group parameter after receiving a group registration request message from the first device.

Herein, the group request message may be used for requesting to obtain the private key corresponding to the group parameter. The group request message may be any type of message, or the group request message may be a message sent in any procedure. In some preferred examples, the group request message is a message sent during initiation of registration by the first device as a proxy for a group. In such examples, the group request message may also be referred to as a registration request, a group registration request, a group registration request message, or the like, and all possible names will not be limited or exhaustively listed herein.

The first serving node may calculate the private key corresponding to the group parameter based on the group parameter as follows. The first serving node jointly calculate the private key corresponding to the group parameter with a first federated node based on the group parameter. That is, the first serving node and the first federated node may perform joint calculation based on the group parameter by using a joint calculation manner, to obtain the private key corresponding to the group parameter. The joint calculation manner may be alternatively referred to as joint security calculation, a joint security calculation manner, or the like.

The first serving node may be a key generation center (KGC). The first federated node is configured to perform joint calculation with the first serving node. In some possible examples, the first serving node may be an operator (for example, an operator server, or referred to as an operation server, or referred to as a first serving node of an operator, etc., which will not be exhaustively listed herein), and the first federated node may be a service party (for example, a service party server, or referred to as a service node, or referred to as a service party serving node, or referred to as a first federated node of a service party, etc., which will not be exhaustively listed herein). That is, a private key is obtained through joint calculation by the service party and the operator, and the private key is distributed by the operator as the KGC to a group. In some possible examples, the first serving node may be a service party (for example, a service party server, or referred to as a service node, or referred to as a service party serving node, or referred to as a first serving node of a service party, etc., which will not be exhaustively listed herein), and the first federated node may be an operator (for example, an operator server, or referred to as an operation server, or referred to as a first federated node of an operator, etc., which will not be exhaustively listed herein). That is, a private key is obtained through joint calculation by the service party and the operator, and the private key is distributed by the service party to a group. It may be understood that, this is merely taken as an example for illustration, and in actual processing, the first serving node and the first federated node may not be limited to the possibilities of the above examples, which will not be limited and exhaustively listed in this embodiment.

More specifically, the first serving node may calculate the private key corresponding to the group parameter based on the group parameter as follows. The group parameter is sent to the first federated node. A first group security parameter is received from the first federated node, where the first group security parameter is calculated based on the group parameter. The private key corresponding to the group parameter is calculated based on the first group security parameter and the group parameter.

The private key corresponding to the group parameter is calculated based on the first group security parameter and the group parameter as follows. A second group security parameter is calculated based on the group parameter and a master private key of the first serving node. The private key corresponding to the group parameter is calculated based on the first group security parameter and the second group security parameter.

Accordingly, the processing by the first federated node may include the following. The group parameter is received from the first serving node. A first group security parameter is calculated based on the group parameter and a master private key of the first federated node. The first group security parameter is sent to the first serving node.

The following first introduces calculation parameters required for joint calculation: q, which represents a large prime number; $G_1$ and $G_2$, which represent two additive groups of order q on an elliptic curve; $P_1$ and $P_2$, which represent arbitrary generators respectively corresponding to $G_1$ and $G_2$; $G_T$, which represents a multiplicative group of order q in a finite field; e, which represents bilinear mapping $G_1 \times G_2 \to G_T$; $Z_q^*$, which represents all integers in a finite field [1, q-1]; $P_{pub} = s \cdot P_2$, where $s_1$ is an arbitrary nonce selected by the first serving node from $Z_q^*$, $s_2$ is an arbitrary nonce selected by the first federated node from $Z_q^*$, and the relational expression $s = s_1 + s_2$ is satisfied; $r = r_1 + r_2$, where $r_1$ is an arbitrary nonce selected by the first serving node from $Z_q^*$, and $r_2$ is an arbitrary nonce selected by the first federated node from $Z_q^*$; $g = e(P_1, P_{pub})$; $H_v$, which represents a cryptographic hash function; hid, which represents a function identifier; a master public key $MPK = (G_1, G_2, G_T, e, P_1, P_2, P_{pub}, g, H_v, hid)$ is public; the master private key $MSK = (s_1, r_1)$ of the first serving node is kept secret, and the master private key $MSK = (s_2, r_2)$ of the first federated node is also kept secret; and $F, H_1$, and $H_2$, which represent system-supported functional functions. The related illustration of the first serving node and the first federated node is the same as that in the above embodiments, and thus will not be repeated herein.

Further, based on the illustration of the calculation parameters, the two-party security calculation can be applied to key generation algorithms in the SM9 digital signature scheme. During calculation of the private key corresponding to the group parameter, the master private keys of both the first serving node and the first federated node (i.e., the service party and the operator) need to be used. Therefore, the first serving node and the first federated node (i.e., the service party and the operator) need to perform joint calculation based on the group parameter, to finally obtain the private key corresponding to the group parameter. A manner of calculating the private key corresponding to the group parameter will be described in detail below.

The first federated node may calculate the first group security parameter based on the group parameter and the master private key of the first federated node as follows. A first parameter is calculated based on the system-supported functional functions, the cryptographic hash function, the function identifier, the large prime number, the group parameter, and the master private key of the first federated node. A second parameter is calculated based on the first parameter and the master private key of the first federated node. A third parameter is calculated based on the master private key of the first federated node. Multiple fourth parameters and multiple fifth parameters are calculated by using MtA. The second parameter, the third parameter, the multiple fourth parameters, and the multiple fifth parameters are determined as the first group security parameter.

The first serving node may calculate the second group security parameter based on the group parameter and the master private key of the first serving node as follows. A sixth parameter is calculated based on the system-supported functional functions, the cryptographic hash function, the function identifier, the large prime number, the group parameter, and the master private key of the first serving node. A seventh parameter is calculated based on the sixth parameter and the master private key of the first serving node. An eighth parameter is calculated based on the master private key of the first serving node. Multiple ninth parameters and multiple tenth parameters are calculated by using MtA. The seventh parameter, the eighth parameter, the multiple ninth parameters, and the multiple tenth parameters are determined as the second group security parameter.

The first serving node may calculate the private key corresponding to the group parameter based on the first group security parameter and the second group security parameter as follows. A first calculated value is obtained by performing summation based on the second parameter, the sixth parameter, the multiple fourth parameters, and the multiple ninth parameters. A second calculated value is obtained by performing summation based on the third parameter, the seventh parameter, the multiple fifth parameters, and the multiple tenth parameters. The private key corresponding to the group parameter is calculated based on the first calculated value and the second calculated value.

The above calculation is derived as follows. A calculation manner for the private key $sk_{Root}$ corresponding to the group parameter is represented as: $sk_{Root} = s \cdot t_1^{-1} \cdot P_1 = s \cdot r \cdot (t_1 \cdot r)^{-1} \cdot P_1$, where $t_1 \cdot r = [s + H_1(H_v, ID_{Root}\|hid, q)] \cdot (r_1 + r_2)$, and $ID_{Root}$ is the group parameter.

The first serving node calculating the fifth parameter $x_1$ may be represented as: $s_1 + 2H_1(H_v, ID_{Root}\|hid, q) = x_1$, and the first federated node calculating the first

parameter $x_2$ may be represented as: $s_2 - H_1(H_v, ID_{Root}\|hid, q) = x_2$. The first parameter and the fifth parameter are stored and kept secret in their respective nodes.

In the above, $t_1 \cdot r = (x_1 + x_2) \cdot (r_1 + r_2) = x_1 \cdot r_1 + x_1 \cdot r_2 + x_2 \cdot r_1 + x_2 \cdot r_2$. $s \cdot r = (s_1 + s_2) \cdot (r_1 + r_2) = s_1 \cdot r_1 + s_1 \cdot r_2 + s_2 \cdot r_1 + s_2 \cdot r_2$.

During calculation of $t_1 \cdot r$, the seventh parameter $x_1 \cdot r_1$ is locally calculated by the first serving node, and the second parameter $x_2 \cdot r_2$ is locally calculated by the first federated node; $x_1 \cdot r_2$ is calculated by using MtA, where a result obtained by the first serving node is denoted as $\alpha_{12}$, a result obtained by the first federated node is denoted as $\beta_{12}$, and $x_1 \cdot r_2 = \alpha_{12} + \beta_{12}$ is satisfied; and $x_2 \cdot r_1$ is calculated by using MtA, where a result obtained by the first serving node is denoted as $\alpha_{21}$, a result obtained by the first federated node is denoted as $\beta_{21}$, and $x_2 \cdot r_1 = \alpha_{21} + \beta_{21}$ is satisfied.

During calculation of $s \cdot r$, the eighth parameter $s_1 \cdot r_1$ is locally calculated by the first serving node, and the third parameter $s_2 \cdot r_2$ is locally calculated by the first federated node; $s_1$ and $r_2$ is calculated by using MtA, where a result obtained by the first serving node is denoted as $\lambda_{12}$, a result obtained by the first federated node is denoted as $\delta_{12}$, and $s_1 \cdot r_2 = \lambda_{12} + \delta_{12}$ is satisfied; and $s_2$ and $r_1$ are calculated by using MtA, where a result obtained by the first serving node is denoted as $\lambda_{21}$, a result obtained by the first federated node is denoted as $\delta_{21}$, and $x_2 \cdot r_1 = \lambda_{21} + \delta_{21}$ is satisfied.

After the above derivation, it is obtained that in the first group security parameter, the second parameter is $x_2 \cdot r_2$, the third parameter is $s_2 \cdot r_2$, the multiple fourth parameters include $\beta_{21}$ and $\beta_{12}$, and the multiple fifth parameters include $\delta_{12}$ and $\delta_{21}$. It is obtained that in the second group security parameter, the seventh parameter is $x_1 \cdot r_1$, the eighth parameter is $s_1 \cdot r_1$, the multiple ninth parameters are $\alpha_{12}$ and $\alpha_{21}$, and the multiple tenth parameters are $\lambda_{21}$ and $\lambda_{12}$.

After obtaining all the above parameters, the first serving node may calculate the first calculated value, which is represented as: $t_1 \cdot r = x_1 \cdot r_1 + \alpha_{12} + \beta_{12} + \alpha_{21} + \beta_{21} + x_2 \cdot r_2$. After obtaining $t_1 \cdot r$, the first serving node may calculate $(t_1 \cdot r)^{-1} \mod q$ in plaintext. After obtaining all the above parameters, the first serving node may calculate the second calculated value, which is represented as: $s \cdot r = s_1 \cdot r_1 + \lambda_{12} + \delta_{12} + \lambda_{21} + \delta_{21} + s_2 \cdot r_2$. Finally, the first serving node calculates the private key corresponding to the group parameter according to the following formula: $sk_{Root} = s \cdot r \cdot (t_1 \cdot r)^{-1} \cdot P_1$. The meaning and calculation manner of each parameter in this formula have been described above and will not be repeated herein. In addition, "$\cdot$" in the above formula may represent dot product calculation.

In some possible embodiments, after the first serving node obtains the private key corresponding to the group parameter through joint calculation, the first serving node may carry the private key corresponding to the group parameter in the group response message and send the group response message to the first device.

Herein, the group response message may be used for responding to the group request message. The group response message may be any type of message. In some preferred examples, the group request message is a message sent during initiation of registration by the first device as a proxy for a group. In such examples, the group response message may also indicate to the first device that the registration for the group is completed. The group response message may also be referred to as a registration response, a group registration response, a group registration response message, or the like, and all possible names will not be limited or exhaustively listed herein.

In some possible embodiments, the group request message may further carry the identifiers of the multiple target devices and the identifier of the first device.

In some embodiments, after receiving the identifiers of the multiple target devices and the identifier of the first device, the first serving node may further perform the following processing: auditing the multiple target devices based on an identifier of each target device and/or auditing the first device based on the identifier of the first device.

Optionally, auditing the first device by the first serving node based on the identifier of the first device may include at least one of the following. Whether the first device is a valid device is audited based on the identifier of the first device, and/or based on the identifier of the first device, on-chain auditing is performed on whether the first device has been revoked, and/or whether the first device can act as a proxy device for each target device is audited based on the identifier of the first device, etc. All operations that may be included in auditing the first device by the first serving node will not be exhaustively listed or repeated herein.

Optionally, auditing each target device by the first serving node based on the identifier of the target device may include at least one of the following. Whether the target device is a valid device is audited based on the identifier of the target device, and/or whether a proxy device for the target device is the first device is audited based on the identifier of the target device, etc. All operations that may be included in auditing the target device by the first serving node will not be exhaustively listed or repeated herein.

Optionally, after receiving the identifiers of the multiple target devices and the identifier of the first device, the first serving node may further perform the following processing. A verification parameter is calculated based on the identifiers of the multiple target devices, and the multiple target devices are authenticated based on the verification parameter and the group parameter. Alternatively, a verification parameter is calculated based on the identifiers of the multiple target devices and the identifier of the first device, and the multiple target devices are audited based on the verification parameter and the group parameter.

In a case, the calculation of the verification parameter based on the identifiers of the multiple target devices is the same as the calculation of the group parameter by using only the identifier of each target device as each leaf node in the above embodiments, except that since the calculation is performed at the first serving node, a result obtained by the first serving node through the calculation is called the verification parameter.

In another case, the calculation of the verification parameter based on the identifiers of the multiple target devices and the identifier of the first device is the same as the several possible manners of calculating the group parameter based on the identifier of the first device and the identifier of each target device in the above embodiments, except that since the calculation is performed at the first serving node, a result obtained by the first serving node through the calculation is called the verification parameter.

The multiple target devices may be audited based on the verification parameter and the group parameter as follows. When the verification parameter is the same as the group parameter, it is determined that the auditing for the multiple target devices succeeds.

In some embodiments, after the first serving node audits the multiple target devices based on the identifier of each target device and/or audits the first device based on the identifier of the first device, the method may further include the following. If the auditing for the multiple target devices succeeds and/or the auditing for the first device succeeds, the first serving node may calculate the private key corresponding to the group parameter, which will not be repeated herein. Whether the first serving node audits the multiple target devices, audits both the target devices and the first device, or audits only the first device falls within the protection scope of this embodiment, and all possible cases will not be limited or exhaustively listed herein.

In some possible embodiments, the first device or the first serving node may further perform on-chain processing on the group parameter.

In an example, the first device may further perform the following processing: uploading the group parameter to a blockchain. That is, the first device uploads and stores the group parameter on the blockchain. A processing occasion for uploading the group parameter by the first device to the blockchain may be any time point after the first device calculates or obtains the group parameter. For example, the processing occasion may be after the first device calculates or obtains the group parameter and before the first device sends the group request message. For another example, the processing occasion may be after the first device receives the group response message, etc. All possible processing occasions will not be exhaustively listed or limited herein.

In an example, the processing by the first serving node may include: uploading the group parameter to a blockchain. That is, the first serving node uploads and stores the group parameter on the blockchain. A processing occasion for uploading the group parameter by the first serving node to the blockchain may be any time point after the first serving node obtains the group parameter. For example, the processing occasion may be after the first serving node obtains the group parameter and before the first serving node sends the group response message. For another example, the processing occasion may be after the first serving node sends the group response message, etc. All possible processing occasions will not be exhaustively listed or limited herein.

It may also be understood that, a state (for example, whether to have been revoked) of the group parameter may also be maintained by the first device, or the state of the group parameter may be maintained by the first serving node. All possible maintenance manners will not be exhaustively listed and limited in this embodiment.

In some possible embodiments, after the first device receives the private key corresponding to the group parameter (i.e., the group response message), the method further includes the following. When a revoked device exists in the multiple target devices, a group update message is sent to the first serving node, where the group update message carries an updated group parameter, and the updated group parameter is obtained through updating based on an identifier of the revoked device. A group update response message is received from the first serving node, where the group update response message carries a private key corresponding to the updated group parameter. Accordingly, the processing by the first serving node may further include the following. A group update message is received from the first device, where the group update message carries an updated group parameter. A private key corresponding to the updated group parameter is calculated based on the updated group parameter. A group update response message is sent to the first device, where the group update response message carries the private key corresponding to the updated group parameter.

The first device may determine whether a revoked device exists among the multiple target devices as follows. The first device periodically detects a state of each target device, and if any target device is detected to be not in a group, the first device determines that this target device is the revoked device. Alternatively, the first device detects whether a revocation notification is received from any target device, and if the revocation notification is received, the first device determines that this target device is the revoked device. The above is merely taken as an example for illustration, and there may be many manners of determining the revoked device by the first device, which will not be exhaustively listed herein.

The first device may calculate the updated group parameter as follows. A first parameter value corresponding to the identifier of the revoked device is removed. One or more associated parameter values related to the first parameter value are determined. The one or more associated parameter values are updated to obtain updated one or more associated parameter values. An updated group eigenvalue is calculated based on the updated one or more associated parameter values. That is, the Merkle tree is updated at the first device side based on the identifier of the revoked device. Each leaf node of an updated Merkle tree corresponds to or stores an identifier of one of other devices except the identifier of the revoked device (other target devices except the revoked device, or the first device and other target devices except the revoked device), and a root node Root of the updated Merkle tree corresponds to the updated group parameter.

Removing the first parameter value corresponding to the identifier of the revoked device may refer to: removing from the Merkle tree a first leaf node storing the identifier of the revoked device, and further removing from the Merkle tree a parent node of the first leaf node. For example, in the case where there are a total of $K$ target devices, if the $i$-th target device among the $K$ target devices is a revoked device, and an identifier of the revoked device is stored in the $i$-th leaf node among $K$ leaf nodes, then the $i$-th leaf node is removed, and a parent node of the $i$-th leaf node is removed.

The one or more associated parameter values related to the first parameter value may be determined as follows. Taking the parent node of the first leaf node as a current node, an upper-level intermediate node corresponding to the current node is searched for from the Merkle tree, whether the upper-level intermediate node is the root node is determined, and if the upper-level intermediate node is not the root node, the upper-level intermediate node is determined as an associated intermediate node related to the first parameter value. Taking the associated intermediate node as a current node, an upper-level intermediate node corresponding to the current node is searched for from the Merkle tree, and whether the upper-level intermediate node is the root node is determined, until it is determined that an upper-level intermediate node of a current node is the root node. A parameter value stored in each associated intermediate node among all determined associated intermediate nodes is determined as each associated parameter value.

For example, any associated intermediate node is associated intermediate node $n$, where $n$ is an integer greater than or equal to 0, or $n$ is an integer greater than or equal to 1. The one or more associated parameter values may be updated to obtain the updated one or more associated parameter values as follows. When multiple child nodes corresponding to associated intermediate node $n$ include a parent node of a first leaf node, a parameter value stored in a parent node of each leaf node except the parent node of the first leaf node corresponding to associated intermediate node $n$ is obtained, the $n$-th first adjustment value is obtained by performing summation on the parameter value stored in the parent node of each leaf node, and an updated associated parameter value of associated intermediate node $n$ is obtained by performing hash calculation on the $n$-th first adjustment value. When each child node among multiple child nodes corresponding to associated intermediate node $n$ is not a parent node of a leaf node, a parameter value stored in each child node corresponding to associated intermediate node $n$ is obtained, the $n$-th second adjustment value is obtained by performing summation on the parameter value stored in each child node, and an updated associated parameter value of associated intermediate node $n$ is obtained by performing hash calculation on the $n$-th second adjustment value.

The updated group eigenvalue may be calculated based on the updated one or more associated parameter values as follows. A parameter value stored in each child node among multiple child nodes corresponding to the root node is obtained, where the multiple child nodes include an associated intermediate node. A third adjustment value is obtained by performing summation on the parameter value stored in each child node corresponding to the root node, the updated group parameter is obtained by performing hash calculation on the third adjustment value, and the updated group parameter is stored in the root node.

In a possible example, with reference to FIG. 4a, for example, in FIG. 4a, there are eight leaf nodes respectively corresponding to eight target devices in a group, and each of the eight leaf nodes is used for storing an ID of a respective target device. Target device 1 is a revoked device, $ID_1$ of target device 1 is stored in leaf node 41, and leaf node 41 and only one parent node 411 corresponding to leaf node 41 are both removed from the Merkle tree. Accordingly, all associated intermediate nodes of parent node 411 of leaf node 41 may include associated intermediate node 421 and associated intermediate node 431 in FIG. 4a. Therefore, associated parameter values stored in node 421 and node 431 need to be updated. For example, an updated associated parameter value in node 421 is an updated hash value ($N_8$) calculated based on a hash value ($N_0$) of child node 410, and an updated associated parameter value in node 431 is a hash value $Hash(N_8+N_9)$ obtained by performing summation based on the updated associated parameter in child node 421 and a hash value ($N_9$) of child node 422 and then performing hash calculation. There are two corresponding child nodes at the lower level of root node 440, namely associated intermediate node 431 and child node 432. An updated group parameter in root node 440 (i.e., Root illustrated in FIG. 4a) is equal to a hash value $Hash(N_{12}+N_{13})$ obtained by performing summation on a hash value ($N_{12}$) of child node 431 and a hash value ($N_{13}$) of child node 432 and then performing hash calculation.

It may be understood that, the above is merely taken as an example for illustration of a calculation manner of the updated group parameter with reference to FIG. 4a, and in actual processing, the Merkle tree may also be obtained through calculation based on the identifier of the first device and the identifier of each target device. In this case, the calculation manner of the updated group parameter is similar to the above processing, and thus will not be repeated.

After receiving the group update message, the first serving node may further calculate the private key corresponding to the updated group parameter based on the updated group parameter as follows. The updated group parameter is sent to a first federated node; an updated first group security parameter is received from the first federated node, where the updated first group security parameter is calculated based on the updated group parameter; and the private key corresponding to the updated group parameter is calculated based on the updated first group security parameter and the updated group parameter. The private key corresponding to the updated group parameter is calculated based on the updated first group security parameter and the updated group parameter as follows. An updated second group security parameter is calculated based on the updated group parameter and a master private key of the first serving node, and the private key corresponding to the updated group parameter is calculated based on the updated first group security parameter and the updated second group security parameter.

Accordingly, the processing by the first federated node may include the following. The updated group parameter is received from the first serving node. An updated first group security parameter is calculated based on the updated group parameter and a master private key of the first federated node. The updated first group security parameter is sent to the first serving node.

In the above example, the specific processing such as calculating the updated first group security parameter, the updated second group security parameter, and the private key corresponding to the updated group parameter is similar to the calculation of the private key corresponding to the group parameter in the above embodiments, except that the "group parameter" is replaced with the "updated group parameter", which will not be repeated.

It may be noted that in another possible example, the above updated group parameter may be obtained by the first device from another device. The another device may have at least calculation and communication functions. The calculation of the updated group parameter by the another device is similar to the above processing, which will not be repeated.

In some possible embodiments, the first device or the first serving node may further perform on-chain processing on the updated group parameter.

In an example, the first device may further perform the following processing: uploading the updated group parameter to a blockchain. That is, the first device uploads and stores the updated group parameter on the blockchain. A processing occasion for uploading the updated group parameter by the first device to the blockchain may be any time point after the first device calculates or obtains the updated group parameter. All possible processing occasions will not be exhaustively listed or limited herein.

In an example, the processing by the first serving node may include: uploading the updated group parameter to a blockchain. That is, the first serving node uploads and stores the updated group parameter on the blockchain. A processing occasion for uploading the updated group parameter by the first serving node to the blockchain may be any time point after the first serving node obtains the updated group parameter. All possible processing occasions will not be exhaustively listed or limited herein.

It may also be understood that, a state (for example, whether to have been revoked) of the updated group parameter may also be maintained by the first device, or the state of the updated group parameter may be maintained by the first serving node. All possible maintenance manners will not be exhaustively listed and limited in this embodiment.

In some possible embodiments, the group update message may further carry the identifier of the revoked device, or the group update message may further carry identifiers of all remaining target devices except the revoked device and the identifier of the first device.

Optionally, in the case where the group update message carries the identifier of the revoked device, the first serving node may update an identity revocation list maintained by the first serving node, and upload an updated identity revocation list to a blockchain.

The identity revocation list may contain only identifiers of all revoked devices. Alternatively, the identity revocation list may contain identifiers of all devices managed by the first serving node, and a tag or flag or related indication is provided for an identifier of each device in the identity revocation list. A tag or flag or related indication corresponding to the identifier of each device indicates whether the device has been revoked or whether the device is a revoked device, etc. For example, if the tag or flag or related indication indicates "yes", "Y", "unrevoked", or a first indication value, it indicates that a corresponding device has not been revoked. For another example, if the tag or flag or related indication indicates "N", "revoked", or a second indication value, it indicates that a corresponding device is a revoked device. The first indication value is different from the second indication value. It may be understood that, the above is merely taken as an example for illustration, and in actual processing, the tag or related indication or the like may be opposite to or different from that in the above examples, which will not be exhaustively listed and limited in this embodiment.

Optionally, in the case where the group update message carries the identifiers of all the remaining target devices except the revoked device and the identifier of the first device, the first serving node may determine an identifier of a revoked device in a group based on the identifiers of all the remaining target devices except the revoked device and the identifier of the first device, then based on the identifier of the revoked device, update an identity revocation list maintained by the first serving node, and upload an updated identity revocation list to a blockchain.

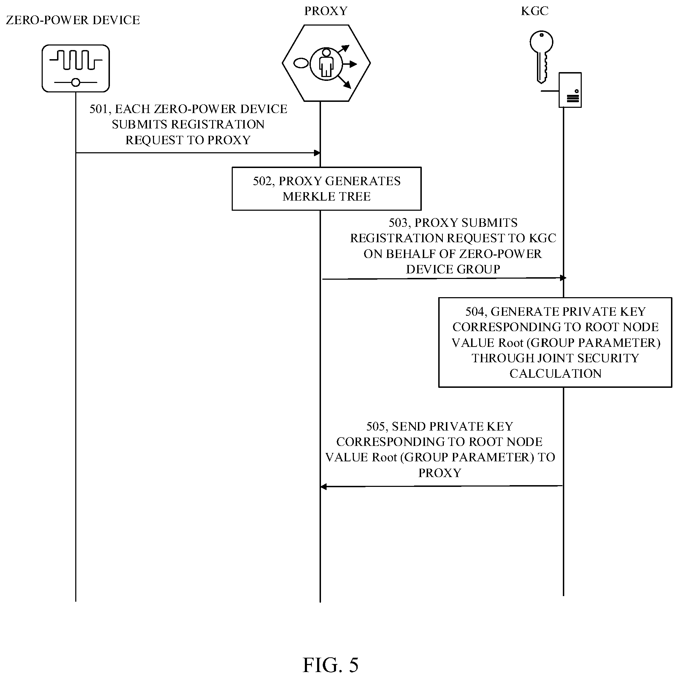

With reference to FIG. 5, for example, in the case where the first device is a proxy, the first serving node is a KGC, and the multiple target devices are multiple zero-power devices (for the sake of simplicity, only one zero-power device is illustrated in FIG. 5, and in actual processing, there may be multiple zero-power devices), the following gives an exemplary illustration of the above communication method.

At 501, each zero-power device submits a registration request to the proxy. The registration request of each zero-power device may contain an identity credential of the zero-power device. Exemplarily, the identity credential may at least include an identifier. The illustration of the identifier is the same as that in the above embodiments and will not be repeated.

At 502, the proxy generates a Merkle tree by binding received identity credentials of a zero-power device group (i.e., the multiple zero-power devices) with an identity $ID_A$ of the proxy.

At 503, the proxy submits a registration request to the KGC on behalf of the zero-power device group. Specifically, the proxy may carry the identity credentials $ID_1$......$ID_7$ of the zero-power device group (i.e., the multiple zero-power devices), the identity $ID_A$ of the proxy, and a root node value Root (group parameter) of the Merkle tree in the registration request, and send the registration request to the KGC.

At 504, the KGC generates a private key $sk_{Root}$ corresponding to the root node value Root (group parameter) through joint security calculation.

Herein, the KGC may first audit identities of the multiple zero-power devices and the identity of the proxy. After the auditing is passed, the KGC may generate the private key $sk_{Root}$ corresponding to the root node value Root (group parameter) through joint security calculation. In this step, a specific processing manner of joint security calculation by the KGC and a first federated node (i.e., a service party and an operator) is the same as that in the above embodiments, and thus will not be repeated.

At 505, the KGC sends to the proxy the private key $sk_{Root}$ corresponding to the root node value Root (group parameter), which is then stored in the proxy.

It may also be noted that, the above operations at 501 may also be optional. For example, the proxy may have obtained an identifier (i.e., the identity credential) of each zero-power device in the zero-power device group in advance, and the proxy may directly perform operations at 502 based on its own preset rule or passive triggering.

Further, the KGC (for example, the operator as the KGC) may maintain an identity revocation list, record an identity of a revoked device, and put the identity revocation list on a blockchain for verification by a verifier. The specific processing manner has been described in detail in the above embodiments and will not be repeated herein.

Various devices involved in the above procedure are exemplarily illustrated below. The service party may be a customer of the operator, for example, a vertical industry or small and medium-sized factory that owns many IoT terminal devices, like a logistics enterprise, a manufacturing industry, and a breeding industry. The operator (or a third-party security service provider) provides IBC services and acts as the KGC to apply for a certificate from an issuing node in a dual-layer architecture. Any zero-power device or any IoT device may be any device of the service party (or any device managed or owned by the service party). The above multiple zero-power devices or multiple IoT devices may form a group, and the multiple zero-power devices or multiple IoT devices may belong to the same KGC (for example, after registering with the same KGC via a proxy, these zero-power devices or IoT devices belong to the same KGC). The proxy device or proxy may be a device of the service party with the on-chain capability and calculation capability for executing various algorithms in cryptography, for example, a user equipment (UE), an IAB, a relay, a repeater, etc.

By using the communication method provided in the embodiments, the first device can act as a proxy to send a group parameter related to the multiple target devices to a serving node, so that the serving node calculates a private key based on the group parameter related to the multiple target devices. As such, a private key corresponding to a group can be distributed through the proxy at one time to the multiple target devices, thereby improving the generation and management efficiency of the private key. In addition, since the private key is generated or distributed based on the group parameter, as long as an attacker is unable to obtain an identifier of each target device, the attacker is unable to obtain the group parameter, and thus is unable to obtain the private key corresponding to the group parameter even if the attacker can know a manner of calculating the private key, thereby ensuring the security of the private key corresponding to the group parameter. Furthermore, since the target device does not need to store any content during the whole processing, the storage space of the target device can be saved, and the storage cost of the target device can be reduced. Moreover, during calculation of the private key corresponding to the group parameter by the serving node, the serving node further performs joint calculation with a federated node, thereby avoiding the problem of security risks such as leakage of the private key in the event of a malicious attack on any party.

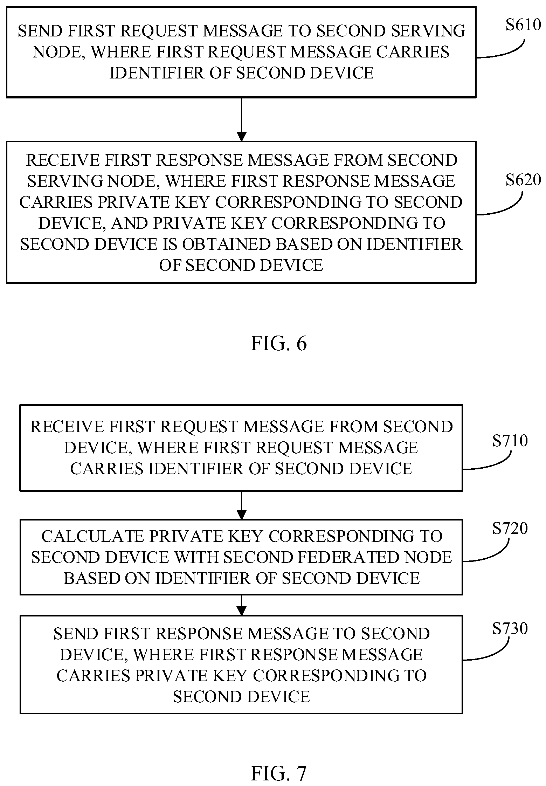

FIG. 6 is a schematic flowchart of a communication method performed by a second device according to an embodiment of the disclosure. The method includes at least part of the following contents.

At S610, a first request message is sent to a second serving node, where the first request message carries an identifier of the second device.

At S620, a first response message is received from the second serving node, where the first response message carries a private key corresponding to the second device, and the private key corresponding to the second device is obtained based on the identifier of the second device.

FIG. 7 is a schematic flowchart of a communication method performed by a second serving node according to another embodiment of the disclosure. The method includes at least part of the following contents.

At S710, a first request message is received from a second device, where the first request message carries an identifier of the second device.

At S720, a private key corresponding to the second device is calculated with a second federated node based on the identifier of the second device.

At S730, a first response message is sent to the second device, where the first response message carries the private key corresponding to the second device.

The second device includes one of: an IoT device, a zero-power device, a terminal, and an access-network device.

In an embodiment, the second device may be a terminal or an access-network device. In this case, the second device may be the same as the first device in the above embodiments, and the second device may be alternatively referred to as a proxy device, a proxy node, a proxy, or the like. That is to say, the first device in the above embodiments may also obtain a private key corresponding to the first device in advance, and a manner of obtaining the private key is the same as the manner of obtaining the private key by the second device in this embodiment.

In an embodiment, the second device may be a zero-power device or an IoT device. The number of multiple target devices is not limited in this embodiment. Optionally, the second device may be any one of: an AIoT device, an active zero-power device, a passive zero-power device, a semi-passive zero-power device, and the like. Optionally, the second device may also be a terminal with a relatively low arithmetic capability. Optionally, the second device may be referred to as a tag. All possible names or possible device types of the target device will not be exhaustively listed herein.

In some possible embodiments, the first request message may be used for requesting to obtain the private key corresponding to the second device. The first request message may be any type of message, or the first request message may be a message sent in any procedure. In some preferred examples, the first request message is a message sent during initiation of registration by the second device. In such examples, the first request message may also be referred to as a first registration request, a first registration request message, or the like, and all possible names will not be limited or exhaustively listed herein.

The second serving node may be the same as or different from the first serving node in the above embodiments. For example, if the first serving node is the same as the second serving node, the second serving node may also be a KGC. For example, if the first serving node is different from the second serving node, the first serving node may be represented as KGC1, and the second serving node may be represented as KGC2.

The second federated node is configured to perform joint calculation with the second serving node. The second federated node may be the same as or different from the first federated node in the above embodiments. In some possible examples, the second serving node may be an operator (for example, an operator server, or referred to as an operation server, or referred to as a second serving node of an operator, etc., which will not be exhaustively listed herein), and the second federated node may be a service party (for example, a service party server, or referred to as a service node, or referred to as a service party serving node, or referred to as a second federated node of a service party, etc., which will not be exhaustively listed herein). That is, the private key corresponding to the second device is obtained through joint calculation by the service party and the operator, and the private key is distributed by the operator as the KGC to the second device. In some possible examples, the second serving node may be a service party (for example, a service party server, or referred to as a service node, or referred to as a service party serving node, or referred to as a second serving node of a service party, etc., which will not be exhaustively listed herein), and the second federated node may be an operator (for example, an operator server, or referred to as an operation server, or referred to as a second federated node of an operator, etc., which will not be exhaustively listed herein). That is, a private key is obtained through joint calculation by the service party and the operator, and the private key is distributed by the service party to the second device. It may be understood that, this is merely taken as an example for illustration, and in actual processing, the second serving node and the second federated node may not be limited to the possibilities of the above examples, which will not be limited and exhaustively listed in this embodiment.

Obtaining the private key corresponding to the second device based on the identifier of the second device may refer to obtaining the private key corresponding to the second device through joint calculation based on the identifier of the second device. More specifically, the private key corresponding to the second device is obtained by performing joint calculation by the second serving node and the second federated node based on the identifier of the second device.

The second serving node calculates the private key corresponding to the second device with the second federated node based on the identifier of the second device as follows. The identifier of the second device is sent to the second federated node. A first security parameter is received from the second federated node, where the first security parameter is calculated based on the identifier of the second device. The private key corresponding to the second device is calculated based on the first security parameter and the identifier of the second device.

The private key corresponding to the second device is calculated based on the first security parameter and the identifier of the second device as follows. A second security parameter is calculated based on the identifier of the second device and a master private key of the second serving node. The private key corresponding to the second device is calculated based on the first security parameter and the second security parameter.

Accordingly, the processing by the second federated node may include the following. The identifier of the second device is received from the second serving node. A first security parameter is calculated based on the identifier of the second device and a master private key of the second federated node. The first security parameter is sent to the second serving node.

Calculation parameters required for joint calculation may include: q, which represents a large prime number; $G_1$ and $G_2$, which represent two additive groups of order q on an elliptic curve; $P_1$ and $P_2$, which represent arbitrary generators respectively corresponding to $G_1$ and $G_2$; $G_T$, which represents a multiplicative group of order q in a finite field; e, which represents bilinear mapping $G_1 \times G_2 \rightarrow G_T$; $Z_q^*$, which represent all integers in a finite field [1, q-1]; $P_{pub} = s \cdot P_2$, where $s_3$ is an arbitrary nonce selected by the second serving node from $Z_q^*$, $s_4$ is an arbitrary nonce selected by the second federated node from $Z_q^*$, and the relational expression $s = s_3 + s_4$ is satisfied; $r = r_3 + r_4$, where $r_3$ is an arbitrary nonce selected by the second serving node from $Z_q^*$, and $r_4$ is an arbitrary nonce selected by the second federated node from $Z_q^*$; $g = e(P_1, P_{pub})$; $H_v$, which represents a cryptographic hash function; hid, which represents a function identifier; a master public key MPK = ($G_1$, $G_2$, $G_T$, e, $P_1$, $P_2$, $P_{pub}$, g, $H_v$, hid) is public; the master private key MSK = ($s_3$, $r_3$) of the second serving node is kept secret, and the master private key MSK = ($s_4$, $r_4$) of the second federated node is also kept secret; and F, $H_1$, and $H_2$, which represent system-supported functional functions.

For the sake of simplicity, the calculation parameters used by the second serving node and the second federated node in this embodiment are described in representation manners similar to the calculation parameters used by the first serving node and the first federated node in the above embodiments. In actual processing, as long as the above similar or identical parameters are used by the second serving node and the second federated node, regardless of other representation manners, it also falls within the protection scope of this embodiment, which will not be repeated.

Further, based on the illustration of the calculation parameters, the two-party security calculation can be applied to key generation algorithms in the SM9 digital signature scheme. During calculation of the private key corresponding to the group parameter, the master private keys of both the second serving node and the second federated node (i.e., the service party and the operator) need to be used. Therefore, the second serving node and the second federated node (i.e., the service party and the operator) need to perform joint calculation based on the identifier of the second device, to finally obtain the private key corresponding to the second device. A manner of calculating the private key corresponding to the second device will be described in detail below.

The second federated node may calculate the first security parameter based on the identifier of the second device and the master private key of the second federated node as follows. A first intermediate parameter is calculated based on the system-supported functional functions, the cryptographic hash function, the function identifier, the large prime number, the identifier of the second device, and the master private key of the second federated node. A second intermediate parameter is calculated based on the first intermediate parameter and the master private key of the second federated node. A third intermediate parameter is calculated based on the master private key of the second federated node. Multiple fourth intermediate parameters and multiple fifth intermediate parameters are calculated by using MtA. The second intermediate parameter, the third intermediate parameter, the multiple fourth intermediate parameters, and the multiple fifth intermediate parameters are determined as the first security parameter.

The second serving node may calculate the second security parameter based on the identifier of the second device and the master private key of the second serving node as follows. A sixth intermediate parameter is calculated based on the system-supported functional functions, the cryptographic hash function, the function identifier, the large prime number, the identifier of the second device, and the master private key of the second serving node. A seventh intermediate parameter is calculated based on the sixth intermediate parameter and the master private key of the second serving node. An eighth intermediate parameter is calculated based on the master private key of the second serving node. Multiple ninth intermediate parameters and multiple tenth intermediate parameters are calculated by using MtA. The seventh intermediate parameter, the eighth intermediate parameter, the multiple ninth intermediate parameters, and the multiple tenth intermediate parameters are determined as the second security parameter.

The second serving node may calculate the private key corresponding to the second device based on the first security parameter and the second security parameter as follows. A first intermediate calculated value is obtained by performing summation based on the second intermediate parameter, the sixth intermediate parameter, the multiple fourth intermediate parameters, and the multiple ninth intermediate parameters. A second intermediate calculated value is obtained by performing summation based on the third intermediate parameter, the seventh intermediate parameter, the multiple fifth intermediate parameters, and the multiple tenth intermediate parameters. The private key corresponding to the second device is calculated based on the first intermediate calculated value and the second intermediate calculated value.

The above calculation is derived as follows. A calculation manner for the private key $sk_A$ corresponding to the second device is represented as: $sk_A = s \cdot t_1^{-1} \cdot P_1 = s \cdot r \cdot (t_1 \cdot r)^{-1} \cdot P_1$, where $t_1 \cdot r = [s + H_1(H_v, ID_A \| hid, q)] \cdot (r_3 + r_4)$, and $ID_A$ is the identifier of the second device.

The second serving node calculating the fifth intermediate parameter $x_3$ may be represented as: $s_3 + 2H_1(H_v, ID_A \| hid, q) = x_3$, and the second federated node calculating the first intermediate parameter $x_4$ may be represented as: $s_4 - H_1(H_v, ID_A \| hid, q) = x_4$. The first intermediate parameter and the fifth intermediate parameter are stored and kept secret in their respective nodes.

In the above, $t_1 \cdot r = (x_3 + x_4) \cdot (r_3 + r_4) = x_3 \cdot r_3 + x_3 \cdot r_4 + x_4 \cdot r_3 + x_4 \cdot r_4$. $s \cdot r = (s_3 + s_4) \cdot (r_3 + r_4) = s_3 \cdot r_3 + s_3 \cdot r_4 + s_4 \cdot r_3 + s_4 \cdot r_4$.

During calculation of $t_1 \cdot r$, the seventh intermediate parameter $x_3 \cdot r_3$ is locally calculated by the second serving node, and the second intermediate parameter $x_4 \cdot r_4$ is locally calculated by the second federated node; $x_3 \cdot r_4$ is calculated by using MtA, where a result obtained by the second serving node is denoted as $\alpha_{34}$, a result obtained by the second federated node is denoted as $\beta_{34}$, and $x_3 \cdot r_4 = \alpha_{34} + \beta_{34}$ is satisfied; and $x_4 \cdot r_3$ is calculated by using MtA, where a result obtained by the second serving node is denoted as $\alpha_{43}$, a result obtained by the second federated node is denoted as $\beta_{43}$, and $x_4 \cdot r_3 = \alpha_{43} + \beta_{43}$ is satisfied.

During calculation of $s \cdot r$, the eighth intermediate parameter $s_3 \cdot r_3$ is locally calculated by the second serving node, and the third intermediate parameter $s_4 \cdot r_4$ is locally calculated by the second federated node; $s_3 \cdot r_4$ is calculated by using MtA, where a result obtained by the second serving node is denoted as $\lambda_{34}$, a result obtained by the second federated node is denoted as $\delta_{34}$, and $s_3 \cdot r_4 = \lambda_{34} + \delta_{34}$ is satisfied; and $s_4 \cdot r_3$ is calculated by using MtA, where a result obtained by the second serving node is denoted as $\lambda_{43}$, a result obtained by the second federated node is denoted as $\delta_{43}$, and $s_4 \cdot r_3 = \lambda_{43} + \delta_{43}$ is satisfied.

After the above derivation, it is obtained that the second intermediate parameter is $x_4 \cdot r_4$, the third intermediate parameter is $s_4 \cdot r_4$, the multiple fourth inter-

mediate parameters may include $\beta_{34}$ and $\beta_{43}$, and the multiple fifth intermediate parameters include $\delta_{34}$ and $\delta_{43}$. In the second security parameter, the seventh intermediate parameter is represented as $x_3 \cdot r_3$, the eighth intermediate parameter is represented as $s_3 \cdot r_3$, the multiple ninth intermediate parameters are represented as $\alpha_{34}$ and $\alpha_{43}$, and the multiple tenth intermediate parameters are represented as $\lambda_{43}$ and $\lambda_{34}$.

After obtaining all the above parameters, the second serving node may calculate the first intermediate calculated value, which is represented as: $t_1 \cdot r = x_3 \cdot r_3 + \alpha_{34} + \beta_{34} + \alpha_{43} + \beta_{43} + x_4 \cdot r_4$. After obtaining $t_1 \cdot r$, the second serving node may calculate $(t_1 \cdot r)^{-1} \bmod q$ in plaintext. After obtaining all the above parameters, the second serving node may calculate the second intermediate calculated value, which is represented as: $s \cdot r = s_3 \cdot r_3 + \lambda_{34} + \delta_{34} + \lambda_{43} + \delta_{43} + s_4 \cdot r_4$. Finally, the second serving node calculates the private key corresponding to the group parameter according to the following formula: $sk_A = s \cdot r \cdot (t_1 \cdot r)^{-1} \cdot P_1$. The meaning and calculation manner of each parameter in this formula have been described above and will not be repeated herein.

In some possible embodiments, after the second serving node obtains the private key corresponding to the second device through joint calculation, the second serving node may carry the private key corresponding to the second device in the first response message and send the first response message to the second device.

Herein, the first response message may be used for responding to the first request message. The first response message may be any type of message. In some preferred examples, the first request message is a message sent during initiation of registration by the second device. In such examples, the first response message may also indicate to the second device that the registration is completed or the registration for the second device succeeds. The first response message may also be referred to as a first registration response, a first registration response message, or the like, and all possible names will not be limited or exhaustively listed herein.

In some possible embodiments, the first response message further carries information of a location of a certificate of the second serving node on a blockchain. That is, after the second serving node obtains the private key corresponding to the second device through joint calculation, the second serving node may carry the private key corresponding to the second device and the information of the location of the certificate of the second serving node on the blockchain in the first response message, and send the first response message to the second device.

It may also be noted that in some possible examples, in addition to being carried in the first response message, the information of the location of the certificate of the second serving node on the blockchain may be sent by the second serving node to the second device via another message. That is, the information of the location of the certificate of the second serving node on the blockchain and the private key corresponding to the second device may be sent to the second device via different messages.

In some possible embodiments, after receiving the identifier of the second device carried in the first request message, the second serving node may further perform the following processing: auditing the second device based on the identifier of the second device.

In some embodiments, auditing the second device by the second serving node based on the identifier of the second device may include: auditing, based on the identifier of the second device, whether the second device is a valid device, or the like. All operations that may be included in auditing the first device by the first serving node will not be exhaustively listed or repeated in this embodiment.

In some embodiments, after the second serving node audits the second device, the method may further include the following. If the auditing for the second device succeeds, the second serving node may calculate the private key corresponding to the second device, which will not be repeated herein.

In some possible embodiments, the second serving node may further perform on-chain processing on the identifier of the second device.

The processing by the second serving node may include: uploading the identifier of the second device to a blockchain. That is, the second serving node uploads and stores the identifier of the second device on the blockchain. A processing occasion for uploading the identifier of the second device by the second serving node to the blockchain may be any time point after the second serving node obtains the identifier of the second device. For example, the processing occasion may be after the second serving node obtains the identifier of the second device and before the second serving node sends the first response message. For another example, the processing occasion may be after the second serving node sends the first response message, etc. For another example, the processing occasion may be after the auditing for the second device by the second serving node succeeds (or is passed), etc. All possible processing occasions will not be exhaustively listed or limited herein.

In some possible embodiments, the second serving node may maintain an identity revocation list. The processing by the second serving node may include the following. If it is determined that the second device has been revoked, the identity revocation list maintained by the second serving node may be updated based on the identifier of the second device revoked, and an updated identity revocation list is uploaded to a blockchain.

Optionally, the identity revocation list may contain only identifiers of all revoked devices. For example, in the case where the second device has been revoked, the second serving node may add the identifier of the second device to the identity revocation list.

Optionally, the identity revocation list may contain identifiers of all devices managed by the second serving node, and a tag or flag or related indication is provided for an identifier of each device in the identity revocation list. A tag or flag or related indication corresponding to the identifier of each device indicates whether the device has been revoked or whether the device is a revoked device, etc. For example, if the tag or flag or related indication indicates "yes", "Y", "unrevoked", or a first indication value, it indicates that a corresponding device has not been revoked. For another example, if the tag or flag or related indication indicates "N", "revoked", or a second indication value, it indicates that a corresponding device is a revoked device. For example, if it is determined that the second device has been revoked, a tag corresponding to the identifier of the second device may be set to "revoked" or "N". The first indication value is different from the second indication value. It may be understood that, the above is merely taken as an example for illustration, and in actual processing, the tag or related indication or the like may be opposite to or different from that in the above examples, which will not be exhaustively listed and limited in this embodiment.

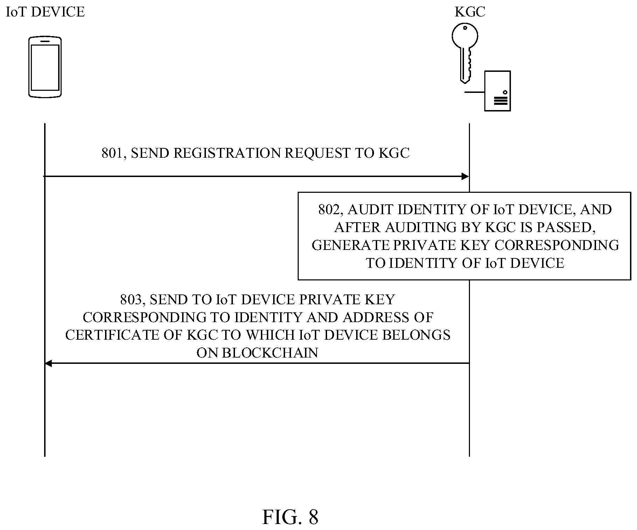

With reference to FIG. 8, for example, in the case where the second device is an IoT device and the second serving node is a KGC (i.e., assuming that the second serving node is the same KGC as the first serving node), the following gives an exemplary illustration of the above communication method.

At 801, for a registration request, the IoT device sends the registration request to the KGC. The registration request may carry an identity $ID_A$ of the IoT device, and $ID_A$ is a factory unique identifier of the device, an identifier issued by an operator, an identifier issued by a service provider, or a combination of two or more of the above identifiers.

At 802, the KGC audits the identity of the IoT device, and after the auditing by the KGC is passed, the KGC generates a private key $sk_A$ corresponding to the identity of the IoT device based on a master private key of the KGC and a key generation algorithm. The KGC may calculate the private key corresponding to the IoT device with a second federated node. A specific calculation manner has been described in detail in the above embodiments and will not be repeated herein. The related illustration of the KGC and the second federated node is also the same as that in the above embodiments and will not be repeated herein.

At 803, the KGC sends to the IoT device the private key corresponding to the identity (i.e., the private key corresponding to the IoT device) and an address (or information of a location) of a certificate of the KGC to which the IoT device belongs on a blockchain. In this case, the IoT device is successfully registered.

Further, the operator, as the KGC, may maintain an identity revocation list, record an identity of a revoked device, and put the identity revocation list on the blockchain for verification by a verifier. The specific processing manner has been described in detail in the above embodiments and will not be repeated herein.

By using the communication method provided in the embodiments, the second device can send the identifier of the second device to a serving node, so that the serving node obtains the private key corresponding to the second device by performing joint calculation based on the identifier of the second device. As such, the problem of security risks such as leakage of the private key in the event of a malicious attack on any party can be avoided. In addition, for the second device, the second device does not need to carry its own certificate at any time to prove an identity of the second device, but only needs to obtain an address of a certificate of its corresponding serving node to prove the identity, thereby avoiding the problem of increased pressure on the storage space of the device due to a need for the second device to carry the certificate containing various public information such as an identity.

The basic principle of public key infrastructure (PKI) in the above embodiments is described as follows. A third-party authority, i.e., a certificate authority (CA), binds a public key held by a user together with identity information (such as name, telephone number, etc.) of the user. Before the binding of the two, the CA verifies the authenticity of an identity of the user, and then the CA signs a certificate bundled with the user and its public key.

Identity based cryptography (IBC) is another branch of public-key cryptography, in which unique characteristic information of a user is used as a public key (i.e., a user identifier) of the user, such as an email address or cellphone number. The user does not need to apply for and exchange a certificate, thereby greatly reducing the complexity of certificate management in a cryptographic system. A private key of the user is generated by a trusted KGC in the system based on private key generation algorithms. Herein, the private key generation algorithms may be Chinese cryptographic algorithms SM9, specifically including SM9 digital signature algorithms, SM9-identity-based encryption (IBE) algorithms, and SM9-key agreement (KA) protocols.

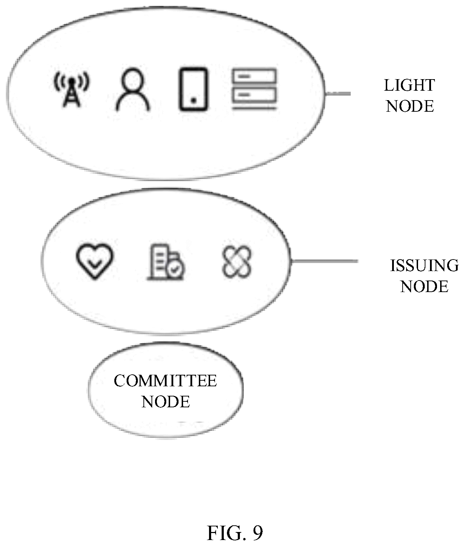

Blockchain-based dual-layer identity architecture: an identity management architecture for integrated sensing and communication (ISAC) scenarios and zero-power scenarios is designed as a dual-layer architecture. As illustrated in FIG. 9, the whole protocol framework consists of two parts, where a CA mode is used from a committee node to an issuing node (with the committee jointly acting as a trusted center), and a blockchain mode is used from the issuing node to an IoT device (i.e., a light node) corresponding to the issuing node. Since the number of issuing nodes is relatively small, the use of the CA mode facilitates authorization and management. However, data of IoT devices authorized by the issuing node is enormous, making a blockchain a better solution. Combining these two modes makes the system more aligned with the current market trend and enables the whole system to be more cohesive and well-defined hierarchically.

Blockchain mode: the blockchain mode is used from an issuing node to an IoT device corresponding to the issuing node. That is, a certificate of the IoT device is stored on a blockchain, and if the certificate is needed, the certificate is searched for at a corresponding location on the chain. After the certificate of the IoT device is issued by the issuing node, an application is submitted for on-chaining, and after the verification by multiple on-chain nodes is passed, the certificate is added to the blockchain based on a consensus algorithm. The on-chain nodes first verify a certificate of the issuing node by using a public key of the joint committee, verify the certificate of the IoT device by using a public key of a corresponding issuing node after the verification is passed, and put the certificate of the IoT device on the chain after the verification is passed and return information of a location of the certificate of the IoT device to the issuing node. Then, the issuing node returns the information of the location to the IoT device. In this scenario, the IoT device itself needs to store only the information of the location of the certificate of the IoT device on the chain, instead of the certificate of the IoT device. Similarly, a verifier only needs to search for the certificate at the corresponding location on the chain according to the information of the location sent by the sender, and if the certificate can be found at the corresponding location, the authenticity and validity of the certificate can be ensured. In this way, the verifier does not need to repeatedly verify the authenticity and validity of the certificate, which significantly reduces the amount of communication and the amount of calculation.

However, in the related art above, for a zero-power IoT device, the IoT device needs to carry its own certificate at any time to prove an identity of the IoT device, and since the content of the certificate containing various public information such as an identity is excessively long, carrying the certificate may increase the pressure on the storage space of the device. For massive IoT, if each device has a certificate, this would impose a significant burden on a storage server. Considering that for the scenario where a 2B service party needs to purchase a terminal identity service from a KGC of an operator or a third-party security service provider in a 2B service of a 6G operator, the operator and/or the third-party security service provider has a lower degree of controllability from the perspective of a service party, and the operator or the third-party security service provider provides an IoT terminal identity service to more than one service party, how to ensure the security of a private key generated for a device will be a more serious security problem.

Key generation algorithms, signature algorithms, and verification algorithms in the digital signature scheme are used in the solution provided in embodiments of the disclosure. The innovation point lies in the improvement of the key generation algorithms using the two-party security calculation technology, thereby ensuring the security of a private key of a terminal device in a mode where a service party delegates an operator or a third-party security service provider as a KGC.

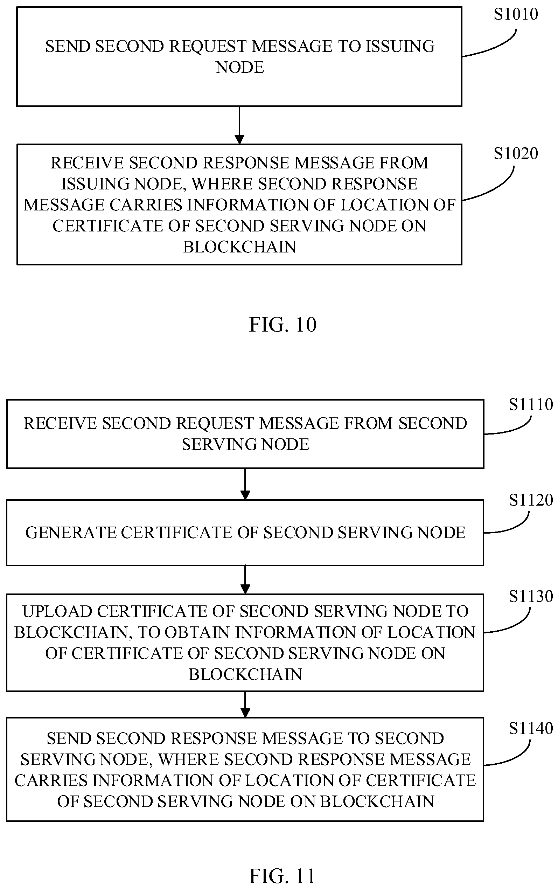

FIG. 10 is a schematic flowchart of a communication method performed by a second serving node according to an embodiment of the disclosure. The method includes at least part of the following contents.

At S1010, a second request message is sent to an issuing node.

At S1020, a second response message is received from the issuing node, where the second response message carries information of a location of a certificate of the second serving node on a blockchain.

FIG. 11 is a schematic flowchart of a communication method performed by an issuing node according to another embodiment of the disclosure. The method includes at least part of the following contents.

At S1110, a second request message is received from a second serving node.

At S1120, a certificate of the second serving node is generated.

At S1130, the certificate of the second serving node is uploaded to a blockchain, to obtain information of a location of the certificate of the second serving node on the blockchain.

At S1140, a second response message is sent to the second serving node, where the second response message carries the information of the location of the certificate of the second serving node on the blockchain.

In some possible embodiments, the second request message may carry at least one of: an identifier of the second serving node, a master public key of the second serving node, other public information of the second serving node, signature information, or the like. The signature information may be calculated from at least one of the identifier of the second serving node, the master public key of the second serving node, or other public information of the second serving node based on a signature algorithm. The signature algorithm is not limited in this embodiment.

The second request message may be used for requesting or applying for the certificate of the second serving node. The second request message may be any type of message, or the second request message may be a message sent in any procedure. In some preferred examples, the second request message is a message sent during initiation of registration by the second serving node. In such examples, the second request message may also be referred to as a second registration request, a second registration request message, or the like, and all possible names will not be limited or exhaustively listed herein.

In some possible embodiments, after receiving the second request message from the second serving node, the issuing node may first verify the second serving node.

Optionally, the issuing node may verify the second serving node as follows. Signature information is verified based on at least one of an identifier of the second serving node, a master public key of the second serving node, or other public information of the second serving node carried in the second request message. If the verification succeeds, it may be determined that the verification for the second serving node is passed or succeeds. Herein, a manner of verifying a signature will not be exhaustively listed or limited.

Optionally, the issuing node may verify the second serving node as follows. Whether the second serving node is a valid device is audited based on an identifier of the second serving node carried in the second request message, and so on.

The above is merely taken as an example for illustration. In actual processing, the issuing node may also verify the second serving node by using the above manners individually or in combination and other more manners, which will not be exhaustively listed and limited herein.

The issuing node generating the certificate of the second serving node may mean that the issuing node signs the certificate of the second serving node with its own private key after generating the certificate of the second serving node. A specific processing manner of generating the certificate is not limited in this embodiment.

Specifically, the issuing node uploads the certificate of the second serving node to the blockchain, to obtain the information of the location of the certificate of the second serving node on the blockchain as follows. The certificate of the second serving node is uploaded and stored on the blockchain, and the information of the location of the certificate of the second serving node on the blockchain is obtained. The information of the location may be alternatively referred to as storage location information, address information, a storage address, or the like, which will not be limited or exhaustively listed herein. Herein, the processing by an on-chain node on the blockchain may include the following. The on-chain node verifies the authenticity of the certificate, and obtains a public key of the issuing node if it is determined that the certificate is authentic. The on-chain node verifies the certificate by using the public key of the issuing node, and if the verification is passed, determines that the verification for the certificate succeeds and completes on-chaining. Accordingly, after the on-chain node successfully verifies the certificate, the issuing node obtains the information of the location of the certificate on the blockchain returned by the on-chain node.

In some possible embodiments, after uploading the certificate of the second serving node to the blockchain to obtain the information of the location of the certificate of the second serving node on the blockchain, the issuing node may carry the information of the location of the certificate of the second serving node on the blockchain in the second response message and send the second response message to the second serving node.

Herein, the second response message may be used for responding to the second request message. The second response message may be any type of message. In some preferred examples, the second response message may also be referred to as a second registration response, a second registration response message, or the like, and all possible names will not be limited or exhaustively listed herein.

In some possible embodiments, the second response message further carries the certificate of the second serving node. That is, after the issuing node uploads the certificate of the second serving node to the blockchain to obtain the information of the location of the certificate of the second serving node on the blockchain, the issuing node may carry the certificate of the second serving node and the information of the location of the certificate of the second serving node on the blockchain in the second response message, and send the second response message to the second serving node.

It may be noted that, the second serving node may be the same as or different from the first serving node in the above embodiments. If the first serving node is different from the second serving node, the first serving node may also perform the same processing as the second serving node, that is, the first serving node may also obtain a certificate of the first serving node and information of a location of the certificate of the first serving node on a blockchain from the issuing node. The specific processing between the first serving node and the issuing node is the same as the processing between the second serving node and the issuing node, and thus the processing by the first serving node will not be repeated in this embodiment.

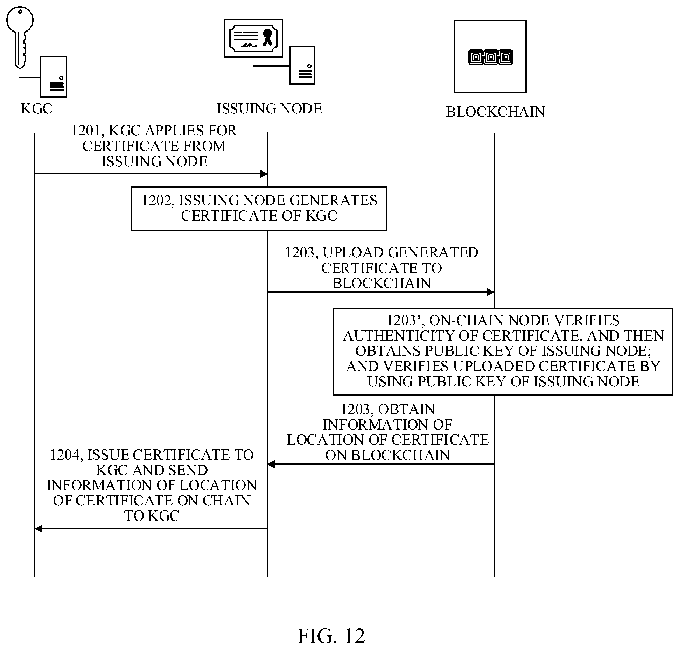

With reference to FIG. 12, for example, in the case where the second serving node is a KGC (i.e., assuming that the second serving node is the same KGC as the first serving node), the following gives an exemplary illustration of the above communication method.

At 1201, the KGC applies for a certificate from an issuing node. Specifically, the KGC may submit an ID, a master public key MPK, and other public information of the KGC, as well as a signature on the above information to the issuing node.

At 1202, after verifying an identity and other information of the KGC, the issuing node generates a certificate of the KGC by signing the KGC with its own private key.

At 1203, the issuing node uploads the generated certificate to a blockchain and obtains information of a location of the certificate on the blockchain. Herein, after an on-chain node on the blockchain receives the certificate, the on-chain node may perform operations at 1103'. That is, the on-chain node verifies the authenticity of the certificate, and obtains a public key of the issuing node if it is determined that the certificate is authentic; and the on-chain node verifies the certificate by using the public key of the issuing node, and if the verification is passed, determines that the verification for the certificate succeeds and completes on-chaining. Accordingly, after the on-chain node successfully verifies the certificate, the issuing node obtains the information of the location of the certificate on the blockchain returned by the on-chain node.

At 1204, the issuing node issues the certificate to the KGC and sends the information (BlockNum) of the location of the certificate on the chain to the KGC.

Further, the certificate of the KGC is verified as follows. When the KGC needs to authenticate itself to another party, the KGC may send its own certificate or the information (BlockNum) of the location of the certificate and assistance information (for proving that the certificate has not been revoked) to a verifier. If the verifier receives the certificate, the verifier may verify the authenticity of the certificate by using the public key of the issuing node. If the verifier receives the information (BlockNum) of the location, the verifier only needs to find the certificate at the corresponding location on the chain to verify the authenticity of the certificate. After successful verification, the verifier verifies the certificate based on the assistance information sent by the KGC and a product of all revoked revocation factors maintained by the issuing node that issued the certificate to the KGC, to verify whether the certificate has been revoked.

By using the communication method provided in the embodiments, the second serving node can obtain the information of the location of the certificate of the second serving node on the blockchain from the issuing node. As such, a device belonging to the second serving node can obtain the information of the location of the certificate of the second serving node. Consequently, the device belonging to the second serving node only needs to use the certificate of the second serving node to complete authentication and other related processing, and the device belonging to the second serving node can prove its identity simply based on an address of the certificate of the second serving node. Therefore, the problem of increased pressure on the storage space of the device due to a need for the device belonging to the second serving node to carry the certificate containing various public information such as an identity can be avoided.

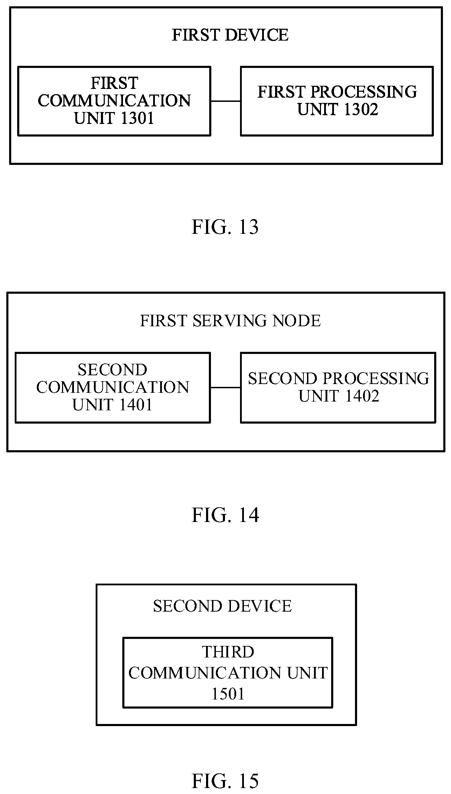

FIG. 13 is a schematic structural diagram of composition of a first device according to an embodiment of the disclosure. The first device includes a first communication unit 1301. The first communication unit 1301 is configured to send a group request message to a first serving node, where the group request message carries a group parameter, and the group parameter is calculated based on identifiers of multiple target devices; and receive a group response message from the first serving node, where the group response message carries a private key corresponding to the group parameter.

As illustrated in FIG. 13, the first device further includes a first processing unit 1302. The first processing unit is configured to calculate a parameter value of each target device among the multiple target devices based on an identifier of the target device; and calculate the group parameter based on the parameter value of the target device.

28. The first device of claim 27, where the first processing unit is configured to calculate the group parameter based on the parameter value of the target device and an identifier of the first device.

The first communication unit is configured to receive a registration request from each target device among the multiple target devices. The registration request of the target device carries an identifier of the target device.

The first communication unit is configured to upload the group parameter to a blockchain.

The first communication unit is configured to send a group update message to the first serving node when a revoked device exists in the multiple target devices, where the group update message carries an updated group parameter, and the updated group parameter is obtained through updating based on an identifier of the revoked device. The first communication unit is further configured to receive a group update response message from the first serving node, where the group update response message carries a private key corresponding to the updated group parameter.

The first device includes one of: a terminal and an access-network device. A target device includes one of: an IoT device and a zero-power device.

FIG. 14 is a schematic structural diagram of composition of a first serving node according to an embodiment of the disclosure. The first serving node includes a second communication unit 1401 and a second processing unit 1402. The second communication unit 1401 is configured to receive a group request message from a first device, where the group request message carries a group parameter; and send a group response message to the first device, where the group response message carries a private key corresponding to the group parameter. The second processing unit 1402 is configured to calculate the private key corresponding to the group parameter based on the group parameter.

The second communication unit is configured to send the group parameter to a first federated node; and receive a first group security parameter from the first federated node, where the first group security parameter is calculated based on the group parameter. The second processing unit is configured to calculate the private key corresponding to the group parameter based on the first group security parameter and the group parameter.

The second processing unit is configured to calculate a second group security parameter based on the group parameter and a master private key of the first serving node; and calculate the private key corresponding to the group parameter based on the first group security parameter and the second group security parameter.

The second communication unit is configured to upload the group parameter to a blockchain.

The second communication unit is configured to receive a group update message from the first device, where the group update message carries an updated group parameter; and send a group update response message to the first device, where the group update response message carries a private key corresponding to the updated group parameter. The second processing unit is configured to calculate the private key corresponding to the updated group parameter based on the updated group parameter.

The first device includes one of: a terminal and an access-network device.

FIG. 15 is a schematic structural diagram of composition of a second device according to an embodiment of the disclosure. The second device includes a third communication unit 1501. The third communication unit 1501 is configured to send a first request message to a second serving node, where the first request message carries an identifier of the second device; and receive a first response message from the second serving node, where the first response message carries a private key corresponding to the second device, and the private key corresponding to the second device is obtained based on the identifier of the second device.

The first response message further carries information of a location of a certificate of the second serving node on a blockchain.

The second device includes one of: an IoT device, a zero-power device, a terminal, and an access-network device.

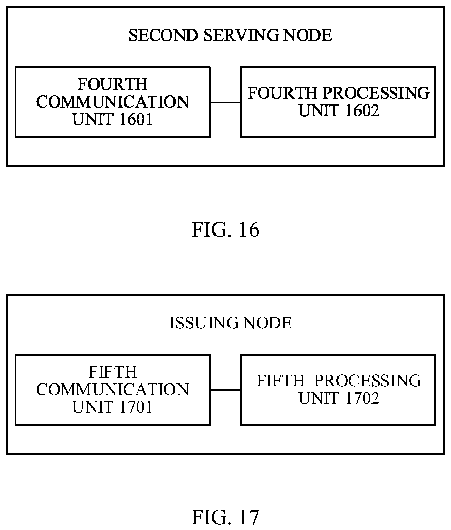

FIG. 16 is a schematic structural diagram of composition of a second serving node according to an embodiment of the disclosure. The second serving node includes a fourth communication unit 1601 and a fourth processing unit 1602. The fourth communication unit 1601 is configured to receive a first request message from a second device, where the first request message carries an identifier of the second device; and send a first response message to the second device, where the first response message carries a private key corresponding to the second device. The fourth processing unit 1602 is configured to calculate the private key corresponding to the second device with a second federated node based on the identifier of the second device.

The fourth communication unit is configured to send the identifier of the second device to the second federated node; and receive a first security parameter from the second federated node, where the first security parameter is calculated based on the identifier of the second device. The fourth processing unit is configured to calculate the private key corresponding to the second device based on the first security parameter and the identifier of the second device.

The fourth processing unit is configured to calculate a second security parameter based on the identifier of the second device and a master private key of the second serving node; and calculate the private key corresponding to the second device based on the first security parameter and the second security parameter.

The first response message further carries information of a location of a certificate of the second serving node on a blockchain.

The second device includes one of: an IoT device, a zero-power device, a terminal, and an access-network device.

A schematic structural diagram of composition of a second serving node according to an embodiment of the disclosure. The second serving node includes a fourth communication unit. The fourth communication unit is configured to send a second request message to an issuing node; and receive a second response message from the issuing node. The second response message carries information of a location of a certificate of the second serving node on a blockchain.

The second response message further carries the certificate of the second serving node.

FIG. 17 is a schematic structural diagram of composition of an issuing node according to an embodiment of the disclosure. The issuing node includes a fifth communication unit 1701 and a fifth processing unit 1702. The fifth communication unit 1701 is configured to receive a second request message from a second serving node; upload a certificate of the second serving node to a blockchain, to obtain information of a location of the certificate of the second serving node on the blockchain; and send a second response message to the second serving node. The second response message carries the information of the location of the certificate of the second serving node on the blockchain. The fifth processing unit 1702 is configured to generate the certificate of the second serving node.

The second response message further carries the certificate of the second serving node.

Devices in embodiments of the disclosure can implement corresponding functions of the devices in the above communication method embodiments. For procedures, functions, implementations, and beneficial effects corresponding to modules (submodules, units, components, or the like) in the devices, reference can be made to corresponding illustrations in the above method embodiments, which will not be repeated herein. It may be noted that functions of modules (submodules, units, components, or the like) in the devices in embodiments of the disclosure may be implemented by different modules (submodules, units, components, or the like), or may be implemented by the same module (submodule, unit, component, or the like).

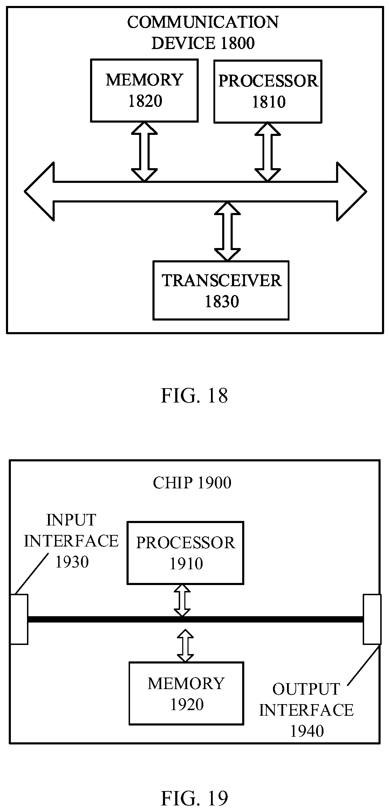

FIG. 18 is a schematic structural diagram of a communication device 1800 according to embodiments of the disclosure. The communication device 1800 includes a processor 1810. The processor 1810 may invoke and execute a computer program stored in a memory, to cause the communication device 1800 to implement the method in embodiments of the disclosure.

In a possible embodiment, the communication device 1800 may further include a memory 1820. The processor 1810 may invoke and execute a computer program stored in the memory 1820, to cause the communication device 1800 to implement the method in embodiments of the disclosure. The memory 1820 may be a separate device independent of the processor 1810, or may be integrated into the processor 1810.

In a possible embodiment, the communication device 1800 may further include a transceiver 1830. The processor 1810 may control the transceiver 1830 to communicate with another device, and specifically, may send information or data to another device, or receive information or data from the another device. The transceiver 1830 may include a transmitter and a receiver. The transceiver 1830 may further include an antenna, where one or more antennas may be provided.

A first device is provided in embodiments of the disclosure. The first device includes a processor and a memory in communication with the processor. The memory is configured to store instructions which, when executed by the processor, cause the first device to: send a group request message to a first serving node, where the group request message carries a group parameter, and the group parameter is calculated based on identifiers of multiple target devices; and receive a group response message from the first serving node, where the group response message carries a private key corresponding to the group parameter.

The instructions further cause the first device to: calculate a parameter value of each target device among the multiple target devices based on an identifier of the target device; and calculate the group parameter based on the parameter value of the target device.

The instructions further cause the first device to: calculate the group parameter based on the parameter value of the target device and an identifier of the first device.

The instructions further cause the first device to: receive a registration request from each target device among the multiple target devices. The registration request of the target device carries an identifier of the target device.

The instructions further cause the first device to: upload the group parameter to a blockchain.

The instructions further cause the first device to: send a group update message to the first serving node when a revoked device exists in the multiple target devices, where the group update message carries an updated group parameter, and the updated group parameter is obtained through updating based on an identifier of the revoked device; and receive a group update response message from the first serving node, where the group update response message carries a private key corresponding to the updated group parameter.

The first device includes one of: a terminal and an access-network device. A target device includes one of: an IoT device and a zero-power device.

A first serving node is provided in embodiments of the disclosure. The first serving node includes a processor and a memory in communication with the processor. The memory is configured to store instructions which, when executed by the processor, cause the first serving node to: receive a group request message from a first device, where the group request message carries a group parameter; send a group response message to the first device, where the group response message carries a private key corresponding to the group parameter; and calculate the private key corresponding to the group parameter based on the group parameter.

The instructions further cause the first serving node to: send the group parameter to a first federated node; receive a first group security parameter from the first federated node, where the first group security parameter is calculated based on the group parameter; and calculate the private key corresponding to the group parameter based on the first group security parameter and the group parameter.

The instructions further cause the first serving node to: calculate a second group security parameter based on the group parameter and a master private key of the first serving node; and calculate the private key corresponding to the group parameter based on the first group security parameter and the second group security parameter.

The instructions further cause the first serving node to: upload the group parameter to a blockchain.

The instructions further cause the first serving node to: receive a group update message from the first device, where the group update message carries an updated group parameter; send a group update response message to the first device, where the group update response message carries a private key corresponding to the updated group parameter; and calculate the private key corresponding to the updated group parameter based on the updated group parameter.

The first device includes one of: a terminal and an access-network device.

A second device is provided in embodiments of the disclosure. The second device includes a processor and a memory in communication with the processor. The memory is configured to store instructions which, when executed by the processor, cause the second device to: send a first request message to a second serving node, where the first request message carries an identifier of the second device; and receive a first response message from the second serving node, where the first response message carries a private key corresponding to the second device, and the private key corresponding to the second device is obtained based on the identifier of the second device.

The first response message further carries information of a location of a certificate of the second serving node on a blockchain.

The second device includes one of: an IoT device, a zero-power device, a terminal, and an access-network device.

A second serving node is provided in embodiments of the disclosure. The second serving node includes a processor and a memory in communication with the processor. The memory is configured to store instructions which, when executed by the processor, cause the second serving node to: receive a first request message from a second device, where the first request message carries an identifier of the second device; send a first response message to the second device, where the first response message carries a private key corresponding to the second device; and calculate the private key corresponding to the second device with a second federated node based on the identifier of the second device.

The instructions further cause the second serving node to: send the identifier of the second device to the second federated node; receive a first security parameter from the second federated node, where the first security parameter is calculated based on the identifier of the second device; and calculate the private key corresponding to the second device based on the first security parameter and the identifier of the second device.

The instructions further cause the second serving node to: calculate a second security parameter based on the identifier of the second device and a master private key of the second serving node; and calculate the private key corresponding to the second device based on the first security parameter and the second security parameter.

The first response message further carries information of a location of a certificate of the second serving node on a blockchain.

The second device includes one of: an IoT device, a zero-power device, a terminal, and an access-network device.

A second serving node is provided in embodiments of the disclosure. The second serving node includes a processor and a memory in communication with the processor. The memory is configured to store instructions which, when executed by the processor, cause the second serving node to: send a second request message to an issuing node; and receive a second response message from the issuing node. The second response message carries information of a location of a certificate of the second serving node on a blockchain.

The second response message further carries the certificate of the second serving node.

An issuing node is provided in embodiments of the disclosure. The issuing node includes a processor and a memory in communication with the processor. The memory is configured to store instructions which, when executed by the processor, cause the issuing node to: receive a second request message from a second serving node; generate a certificate of the second serving node; upload the certificate of the second serving node to a blockchain, to obtain information of a location of the certificate of the second serving node on the blockchain; and send a second response message to the second serving node. The second response message carries the information of the location of the certificate of the second serving node on the blockchain.

The second response message further carries the certificate of the second serving node.

FIG. 19 is a schematic structural diagram of a chip 1900 according to embodiments of the disclosure. The chip 1900 includes a processor 1910. The processor 1910 may invoke and execute a computer program stored in a memory to implement the method in embodiments of the disclosure. In a possible embodiment, the chip 1900 may further include a memory 1920. The processor 1910 may invoke and execute a computer program stored in the memory 1920, to implement the method performed by the access-network device or core-network device in embodiments of the disclosure. The memory 1920 may be a separate device independent of the processor 1910, or may be integrated into the processor 1910. In a possible embodiment, the chip 1900 may further include an input interface 1930. The processor 1910 may control the input interface 1930 to communicate with another device or chip, and specifically, may obtain information or data sent by the another device or chip. In a possible embodiment, the chip 1900 may further include an output interface 1940. The processor 1910 may control the output interface 1940 to communicate with another device or chip, and specifically, may output information or data to the another device or chip. In a possible embodiment, the chip may be applied to the devices in embodiments of the disclosure, and the chip may implement corresponding procedures implemented by the devices in the methods according to embodiments of the disclosure, which will not be repeated herein for the sake of simplicity. It may be understood that, the chip mentioned in embodiments of the disclosure may also be a system-on-chip (SoC).

The processor mentioned above may be a general-purpose processor, a digital signal processor (DSP), a field programmable gate array (FPGA), an application specific integrated circuit (ASIC), or another programmable logic device, a transistor logic device, a discrete hardware component, or the like. The general-purpose processor may be a microprocessor, or may be any conventional processor or the like. The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), etc. In other words, the memory in embodiments of the disclosure is intended to include, but is not limited to, these and any other suitable types of memory.

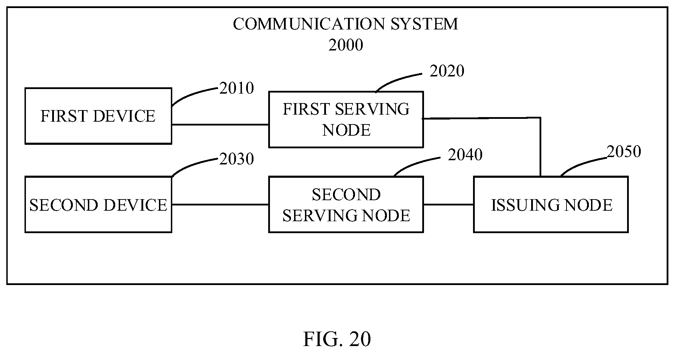

FIG. 20 is a schematic block diagram of a communication system 2000 according to embodiments of the disclosure. The communication system 2000 includes a first device 2010, a first serving node 2020, a second device 2030, and a second serving node 2040, and an issuing node 2050. All or part of the above embodiments can be implemented through software, hardware, firmware, or any other combination thereof. When implemented by software, all or part of the above embodiments can be implemented in the form of a computer program product. The computer program product includes one or more computer instructions. When the computer program instructions are applied and executed on a computer, all or part of the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usablemedium or a data storage device such as a server, a data center, or the like which is integrated with one or more usable media. The usable medium can be a magnetic medium (such as a hard disc) or a semiconductor medium (such as a solid state disk (SSD)), etc.

It may be understood that in various embodiments of the disclosure, the magnitude of a sequence number of each of the above processes does not mean an execution order, and an execution order of each process can be determined according to a function and an internal logic of the process, which shall not constitute any limitation to an implementation process of embodiments of the disclosure.

It will be evident to those skilled in the art that, for the sake of convenience and simplicity, in terms of the specific working processes of the foregoing systems, apparatuses, and units, reference can be made to the corresponding processes in the above method embodiments, which will not be repeated herein.

The foregoing elaborations are merely embodiments of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

**Claims**

1. A communication method performed by a first device, comprising:

   sending a group request message to a first serving node, wherein the group request message carries a group parameter, and the group parameter is calculated based on identifiers of a plurality of target devices; and
   receiving a group response message from the first serving node, wherein the group response message carries a private key corresponding to the group parameter.

2. The method of claim 1, further comprising:

   calculating a parameter value of each target device among the plurality of target devices based on an identifier of the target device; and
   calculating the group parameter based on the parameter value of the target device.

3. The method of claim 2, wherein calculating the group parameter based on the parameter value of the target device comprises:
   calculating the group parameter based on the parameter value of the target device and an identifier of the first device.

4. The method of any one of claims 1 to 3, further comprising:
   receiving a registration request from each target device among the plurality of target devices, wherein the registration request of the target device carries an identifier of the target device.

5. The method of any one of claims 1 to 4, further comprising:
   uploading the group parameter to a blockchain.

6. The method of any one of claims 1 to 5, further comprising:

   sending a group update message to the first serving node in response to existence of a revoked device in the plurality of target devices, wherein the group update message carries an updated group parameter, and the updated group parameter is obtained through updating based on an identifier of the revoked device; and
   receiving a group update response message from the first serving node, wherein the group update response message carries a private key corresponding to the updated group parameter.

7. The method of any one of claims 1 to 6, wherein the first device comprises one of: a terminal and an access-network device; and a target device comprises one of: an internet of things (IoT) device and a zero-power device.

8. A communication method performed by a first serving node, comprising:

receiving a group request message from a first device, wherein the group request message carries a group parameter;
calculating a private key corresponding to the group parameter based on the group parameter; and
sending a group response message to the first device, wherein the group response message carries the private key corresponding to the group parameter.

9. The method of claim 8, wherein calculating the private key corresponding to the group parameter based on the group parameter comprises:

sending the group parameter to a first federated node;
receiving a first group security parameter from the first federated node, wherein the first group security parameter is calculated based on the group parameter; and
calculating the private key corresponding to the group parameter based on the first group security parameter and the group parameter.

10. The method of claim 9, wherein calculating the private key corresponding to the group parameter based on the first group security parameter and the group parameter comprises:

calculating a second group security parameter based on the group parameter and a master private key of the first serving node; and
calculating the private key corresponding to the group parameter based on the first group security parameter and the second group security parameter.

11. The method of any one of claims 8 to 10, further comprising:
uploading the group parameter to a blockchain.

12. The method of any one of claims 8 to 11, further comprising:

receiving a group update message from the first device, wherein the group update message carries an updated group parameter;
calculating a private key corresponding to the updated group parameter based on the updated group parameter; and

sending a group update response message to the first device, wherein the group update response message carries the private key corresponding to the updated group parameter.

13. The method of any one of claims 8 to 12, wherein the first device comprises one of: a terminal and an access-network device.

14. A communication method performed by a second device, comprising:

sending a first request message to a second serving node, wherein the first request message carries an identifier of the second device; and
receiving a first response message from the second serving node, wherein the first response message carries a private key corresponding to the second device, and the private key corresponding to the second device is obtained based on the identifier of the second device.

15. The method of claim 14, wherein the first response message further carries information of a location of a certificate of the second serving node on a blockchain.

16. The method of claim 14 or 15, wherein the second device comprises one of: an internet of things (IoT) device, a zero-power device, a terminal, and an access-network device.

17. A communication method performed by a second serving node, comprising:

receiving a first request message from a second device, wherein the first request message carries an identifier of the second device;
calculating a private key corresponding to the second device with a second federated node based on the identifier of the second device; and
sending a first response message to the second device, wherein the first response message carries the private key corresponding to the second device.

18. The method of claim 17, wherein calculating the private key corresponding to the second device with the second federated node based on the identifier of the second device comprises:

sending the identifier of the second device to the second federated node;
receiving a first security parameter from the second federated node, wherein the first security parameter is calculated based on the identifier of the second device; and
calculating the private key corresponding to the second device based on the first security parameter and the identifier of the second device.

19. The method of claim 18, wherein calculating the private key corresponding to the second device based on the first security parameter and the identifier of the second device comprises:

calculating a second security parameter based on the identifier of the second device and a master private key of the second serving node; and
calculating the private key corresponding to the second device based on the first security parameter and the second security parameter.

20. The method of any one of claims 17 to 19, wherein the first response message further carries information of a location of a certificate of the second serving node on a blockchain.

21. The method of any one of claims 17 to 20, wherein the second device comprises one of: an internet of things (IoT) device, a zero-power device, a terminal, and an access-network device.

22. A communication method performed by a second serving node, comprising:

sending a second request message to an issuing node; and
receiving a second response message from the issuing node, wherein the second response message carries information of a location of a certificate of the second serving node on a blockchain.

23. The method of claim 22, wherein the second response message further carries the certificate of the second serving node.

24. A communication method performed by an issuing node, comprising:

receiving a second request message from a second serving node;
generating a certificate of the second serving node;
uploading the certificate of the second serving node to a blockchain, to obtain information of a location of the certificate of the second serving node on the blockchain; and
sending a second response message to the second serving node, wherein the second response message carries the information of the location of the certificate of the second serving node on the blockchain.

25. The method of claim 24, wherein the second response message further carries the certificate of the second serving node.

26. A first device, comprising:
a first communication unit configured to send a group request message to a first serving node, wherein the group request message carries a group parameter, and the group parameter is calculated based on identifiers of a plurality of target devices; and receive a group response message from the first serving node, wherein the group response message carries a private key corresponding to the group parameter.

27. The first device of claim 26, further comprising:
a first processing unit configured to calculate a parameter value of each target device among the plurality of target devices based on an identifier of the target device; and calculate the group parameter based on the parameter value of the target device.

28. The first device of claim 27, wherein the first processing unit is configured to calculate the group parameter based on the parameter value of the target device and an identifier of the first device.

29. The first device of any one of claims 26 to 28, wherein the first communication unit is configured to receive a registration request from each target device among the plurality of target devices, wherein the registration request of the target device carries an identifier of the target device.

30. The first device of any one of claims 26 to 29, wherein the first communication unit is configured to upload the group parameter to a blockchain.

31. The first device of any one of claims 26 to 30, wherein the first communication unit is configured to send a group update message to the first serving node in response to existence of a revoked device in the plurality of target devices, wherein the group update message carries an updated group parameter, and the updated group parameter is obtained through updating based on an identifier of the revoked device; and receive a group update response message from the first serving node, wherein the group update response message carries a private key corresponding to the updated group parameter.

32. The first device of any one of claims 26 to 31, wherein the first device comprises one of: a terminal and an access-network device; and a target device comprises one of: an internet of things (IoT) device and a zero-power device.

33. A first serving node, comprising:

a second communication unit configured to receive a group request message from a first device, wherein the group request message carries a group parameter; and send a group response message to the first device, wherein the group response message carries a private key corresponding to the group parameter; and a second processing unit configured to calculate the private key corresponding to the group parameter based on the group parameter.

34. The first serving node of claim 33, wherein

the second communication unit is configured to send the group parameter to a first federated node; and receive a first group security parameter from the first federated node, wherein the first group security parameter is calculated based on the group parameter; and the second processing unit is configured to calculate the private key corresponding to the group parameter based on the first group security parameter and the group parameter.

35. The first serving node of claim 34, wherein the second processing unit is configured to calculate a second group security parameter based on the group parameter and a master private key of the first serving node; and calculate the private key corresponding to the group parameter based on the first group security parameter and the second group security parameter.

36. The first serving node of any one of claims 33 to 35, wherein the second communication unit is configured to upload the group parameter to a blockchain.

37. The first serving node of any one of claims 33 to 36, wherein

the second communication unit is configured to receive a group update message from the first device, wherein the group update message carries an updated group parameter; and send a group update response message to the first device, wherein the group update response message carries a private key corresponding to the updated group parameter; and the second processing unit is configured to calculate the private key corresponding to the updated group parameter based on the updated group parameter.

38. The first serving node of any one of claims 33 to 37, wherein the first device comprises one of: a terminal and an access-network device.

39. A second device, comprising:

a third communication unit configured to send a first request message to a second serving node, wherein the first request message carries an identifier of the second device; and receive a first response message from the second serving node, wherein the first response message carries a private key corresponding to the second device, and the private key corresponding to the second device is obtained based on the identifier of the second device.

40. The second device of claim 39, wherein the first response message further carries information of a location of a certificate of the second serving node on a blockchain.

41. The second device of claim 39 or 40, wherein the second device comprises one of: an internet of things (IoT) device, a zero-power device, a terminal, and an access-network device.

42. A second serving node, comprising:

a fourth communication unit configured to receive a first request message from a second device, wherein the first request message carries an identifier of the second device; and send a first response message to the second device, wherein the first response message carries a private key corresponding to the second device; and a fourth processing unit configured to calculate the private key corresponding to the second device with a second federated node based on the identifier of the second device.

43. The second serving node of claim 42, wherein

the fourth communication unit is configured to send the identifier of the second device to the second federated node; and receive a first security parameter from the second federated node, wherein the first security parameter is calculated based on the identifier of the second device; and the fourth processing unit is configured to calculate the private key corresponding to the second device based on the first security parameter and the identifier of the second device.

44. The second serving node of claim 43, wherein the fourth processing unit is configured to calculate a second security parameter based on the identifier of the second device and a master private key of the second serving node; and calculate the private key corresponding to the second device based on the first security parameter and the second security parameter.

**45.** The second serving node of any one of claims 42 to 44, wherein the first response message further carries information of a location of a certificate of the second serving node on a blockchain.

**46.** The second serving node of any one of claims 42 to 45, wherein the second device comprises one of: an internet of things (IoT) device, a zero-power device, a terminal, and an access-network device.

**47.** A second serving node, comprising:
a fourth communication unit configured to send a second request message to an issuing node; and receive a second response message from the issuing node, wherein the second response message carries information of a location of a certificate of the second serving node on a blockchain.

**48.** The second serving node of claim 47, wherein the second response message further carries the certificate of the second serving node.

**49.** An issuing node, comprising:

a fifth communication unit configured to receive a second request message from a second serving node; upload a certificate of the second serving node to a blockchain, to obtain information of a location of the certificate of the second serving node on the blockchain; and send a second response message to the second serving node, wherein the second response message carries the information of the location of the certificate of the second serving node on the blockchain; and
a fifth processing unit configured to generate the certificate of the second serving node.

**50.** The issuing node of claim 49, wherein the second response message further carries the certificate of the second serving node.

**51.** A first device, comprising:
a transceiver, a processor, and a memory, wherein the memory is configured to store a computer program, and the processor is configured to invoke and execute the computer program stored in the memory, to cause the first device to perform the method of any one of claims 7 to 7.

**52.** A first serving node, comprising:
a transceiver, a processor, and a memory, wherein the memory is configured to store a computer program, and the processor is configured to invoke and execute the computer program stored in the memory, to cause the first serving node to perform the method of any one of claims 8 to 13.

**53.** A second device, comprising:
a transceiver, a processor, and a memory, wherein the memory is configured to store a computer program, and the processor is configured to invoke and execute the computer program stored in the memory, to cause the second device to perform the method of any one of claims 14 to 16.

**54.** A second serving node, comprising:
a transceiver, a processor, and a memory, wherein the memory is configured to store a computer program, and the processor is configured to invoke and execute the computer program stored in the memory, to cause the second serving node to perform the method of any one of claims 17 to 21 or the method of any one of claims 22 to 23.

**55.** An issuing node, comprising:
a transceiver, a processor, and a memory, wherein the memory is configured to store a computer program, and the processor is configured to invoke and execute the computer program stored in the memory, to cause the issuing node to perform the method of any one of claims 24 to 25.

**56.** A chip, comprising:
a processor configured to invoke and execute a computer program stored in a memory, to cause a device equipped with the chip to perform the method of any one of claims 1 to 7, the method of any one of claims 8 to 13, the method of any one of claims 14 to 16, the method of any one of claims 17 to 21, the method of any one of claims 22 to 23, or the method of any one of claims 24 to 25.

**57.** A computer-readable storage medium configured to store a computer program which, when executed by a device, causes the device to perform the method of any one of claims 1 to 7, the method of any one of claims 8 to 13, the method of any one of claims 14 to 16, the method of any one of claims 17 to 21, the method of any one of claims 22 to 23, or the method of any one of claims 24 to 25.

**58.** A computer program product comprising computer program instructions which cause a computer to perform the method of any one of claims 1 to 7, the method of any one of claims 8 to 13, the method of any one of claims 14 to 16, the method of any one of claims 17 to 21, the method of any one of claims 22 to 23, or the method of any one of claims 24 to 25.

**59.** A computer program causing a computer to perform the method of any one of claims 1 to 7, the method of any one of claims 8 to 13, the method of any one of claims 14 to 16, the method of any one of claims 17 to 21, the method of any one of claims 22 to 23, or the method of any one of claims 24 to 25.

**100**

110

120                                                    120

FIG. 1

| SEND GROUP REQUEST MESSAGE TO FIRST SERVING NODE, WHERE GROUP REQUEST MESSAGE CARRIES GROUP PARAMETER, AND GROUP PARAMETER IS CALCULATED BASED ON IDENTIFIERS OF MULTIPLE TARGET DEVICES | S210 |
|---|---|

| RECEIVE GROUP RESPONSE MESSAGE FROM FIRST SERVING NODE, WHERE GROUP RESPONSE MESSAGE CARRIES PRIVATE KEY CORRESPONDING TO GROUP PARAMETER | S220 |
|---|---|

FIG. 2

```
┌─────────────────────────────────────────────┐
│  RECEIVE GROUP REQUEST MESSAGE FIRST         │   S310
│  DEVICE, WHERE GROUP REQUEST MESSAGE         │
│  CARRIES GROUP PARAMETER                     │
└─────────────────────────────────────────────┘
                      │
                      ▼
┌─────────────────────────────────────────────┐
│  CALCULATE PRIVATE KEY CORRESPONDING         │   S320
│  TO GROUP PARAMETER BASED ON GROUP           │
│  PARAMETER                                   │
└─────────────────────────────────────────────┘
                      │
                      ▼
┌─────────────────────────────────────────────┐
│  SEND GROUP RESPONSE MESSAGE TO FIRST        │   S330
│  DEVICE, WHERE GROUP RESPONSE MESSAGE        │
│  CARRIES PRIVATE KEY CORRESPONDING TO        │
│  GROUP PARAMETER                             │
└─────────────────────────────────────────────┘
```

FIG. 3

440

Hash(N$_{12}$+N$_{13}$)   Root

431

Hash(N$_8$+N$_9$)   N$_{12}$

432

Hash(N$_{10}$+N$_{11}$)   N$_{13}$

421

Hash(N$_0$+N$_1$)   N$_8$

422

Hash(N$_2$+N$_3$)   N$_9$

Hash(N$_4$+N$_5$)   N$_{10}$

Hash(N$_6$+N$_7$)   N$_{11}$

410

Hash(ID$_0$)   N$_0$

411

Hash(ID$_1$)   N$_1$

412

Hash(ID$_2$)   N$_2$

413

Hash(ID$_3$)   N$_3$

Hash(ID$_4$)   N$_4$

Hash(ID$_5$)   N$_5$

Hash(ID$_6$)   N$_6$

Hash(ID$_7$)   N$_7$

40

ID$_0$

41

ID$_1$

ID$_2$

ID$_3$

44

ID$_4$

ID$_5$

ID$_6$

ID$_7$

FIG. 4a

FIG. 4b

ZERO-POWER DEVICE
PROXY
KGC

501, EACH ZERO-POWER DEVICE
SUBMITS REGISTRATION
REQUEST TO PROXY

502, PROXY GENERATES
MERKLE TREE

503, PROXY SUBMITS
REGISTRATION REQUEST TO KGC
ON BEHALF OF ZERO-POWER
DEVICE GROUP

504, GENERATE PRIVATE KEY
CORRESPONDING TO ROOT NODE
VALUE Root (GROUP PARAMETER)
THROUGH JOINT SECURITY
CALCULATION

505, SEND PRIVATE KEY
CORRESPONDING TO ROOT NODE
VALUE Root (GROUP PARAMETER) TO
PROXY

FIG. 5

SEND FIRST REQUEST MESSAGE TO SECOND SERVING NODE, WHERE FIRST REQUEST MESSAGE CARRIES IDENTIFIER OF SECOND DEVICE — S610

RECEIVE FIRST RESPONSE MESSAGE FROM SECOND SERVING NODE, WHERE FIRST RESPONSE MESSAGE CARRIES PRIVATE KEY CORRESPONDING TO SECOND DEVICE, AND PRIVATE KEY CORRESPONDING TO SECOND DEVICE IS OBTAINED BASED ON IDENTIFIER OF SECOND DEVICE — S620

FIG. 6

RECEIVE FIRST REQUEST MESSAGE FROM SECOND DEVICE, WHERE FIRST REQUEST MESSAGE CARRIES IDENTIFIER OF SECOND DEVICE — S710

CALCULATE PRIVATE KEY CORRESPONDING TO SECOND DEVICE WITH SECOND FEDERATED NODE BASED ON IDENTIFIER OF SECOND DEVICE — S720

SEND FIRST RESPONSE MESSAGE TO SECOND DEVICE, WHERE FIRST RESPONSE MESSAGE CARRIES PRIVATE KEY CORRESPONDING TO SECOND DEVICE — S730

FIG. 7

IoT DEVICE                                                                                    KGC

801, SEND REGISTRATION REQUEST TO KGC

802, AUDIT IDENTITY OF IoT DEVICE, AND
AFTER AUDITING BY KGC IS PASSED,
GENERATE PRIVATE KEY CORRESPONDING
TO IDENTITY OF IoT DEVICE

803, SEND TO IoT DEVICE PRIVATE KEY
CORRESPONDING TO IDENTITY AND ADDRESS OF
CERTIFICATE OF KGC TO WHICH IoT DEVICE BELONGS
ON BLOCKCHAIN

FIG. 8

LIGHT
NODE

ISSUING
NODE

COMMITTEE
NODE

FIG. 9

SEND SECOND REQUEST MESSAGE TO ISSUING NODE — S1010

RECEIVE SECOND RESPONSE MESSAGE FROM ISSUING NODE, WHERE SECOND RESPONSE MESSAGE CARRIES INFORMATION OF LOCATION OF CERTIFICATE OF SECOND SERVING NODE ON BLOCKCHAIN — S1020

FIG. 10

RECEIVE SECOND REQUEST MESSAGE FROM SECOND SERVING NODE — S1110

GENERATE CERTIFICATE OF SECOND SERVING NODE — S1120

UPLOAD CERTIFICATE OF SECOND SERVING NODE TO BLOCKCHAIN, TO OBTAIN INFORMATION OF LOCATION OF CERTIFICATE OF SECOND SERVING NODE ON BLOCKCHAIN — S1130

SEND SECOND RESPONSE MESSAGE TO SECOND SERVING NODE, WHERE SECOND RESPONSE MESSAGE CARRIES INFORMATION OF LOCATION OF CERTIFICATE OF SECOND SERVING NODE ON BLOCKCHAIN — S1140

FIG. 11

KGC

ISSUING NODE

BLOCKCHAIN

1201, KGC APPLIES FOR
CERTIFICATE FROM
ISSUING NODE

1202, ISSUING NODE GENERATES
CERTIFICATE OF KGC

1203, UPLOAD GENERATED
CERTIFICATE TO
BLOCKCHAIN

1203', ON-CHAIN NODE VERIFIES
AUTHENTICITY OF CERTIFICATE, AND THEN
OBTAINS PUBLIC KEY OF ISSUING NODE;
AND VERIFIES UPLOADED CERTIFICATE BY
USING PUBLIC KEY OF ISSUING NODE

1203, OBTAIN
INFORMATION OF
LOCATION OF CERTIFICATE
ON BLOCKCHAIN

1204, ISSUE CERTIFICATE TO
KGC AND SEND
INFORMATION OF LOCATION
OF CERTIFICATE ON CHAIN
TO KGC

FIG. 12

FIRST DEVICE

| FIRST COMMUNICATION UNIT 1301 | FIRST PROCESSING UNIT 1302 |

FIG. 13

FIRST SERVING NODE

| SECOND COMMUNICATION UNIT 1401 | SECOND PROCESSING UNIT 1402 |

FIG. 14

SECOND DEVICE

THIRD COMMUNICATION UNIT 1501

FIG. 15

SECOND SERVING NODE

FOURTH COMMUNICATION UNIT 1601

FOURTH PROCESSING UNIT 1602

FIG. 16

ISSUING NODE

FIFTH COMMUNICATION UNIT 1701

FIFTH PROCESSING UNIT 1702

FIG. 17

COMMUNICATION
DEVICE 1800

MEMORY
1820

PROCESSOR
1810

TRANSCEIVER
1830

FIG. 18

CHIP 1900

INPUT
INTERFACE
1930

PROCESSOR
1910

MEMORY
1920

OUTPUT
INTERFACE
1940

FIG. 19

FIG. 20

## INTERNATIONAL SEARCH REPORT

| International application No. |
|---|
| **PCT/CN2023/120490** |

| A. | CLASSIFICATION OF SUBJECT MATTER |
|---|---|

H04W12/041(2021.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, WPABS, USTXT, EPTXT, WOTXT, CNKI, IEEE: 标识, 参数, 代理, 多, 计算, 节点, 设备, 终端, 默克尔树, 签发, 请求, 区块链, 群, 群组, 上传, 生成, 私钥, 位置, 证书, 主私钥, 组, ID, KGC, merkle, Identity, Parameter, Agent, Compute, Terminal, Node, Issue, Request, Blockchain, Group, Upload, Private Key, Location, Certificate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113645032 A (BEIKA TECHNOLOGY CO., LTD.) 12 November 2021 (2021-11-12) description, paragraphs [0030]-[0098] | 1-13, 26-38, 51-52, 56-59 |
| X | CN 111106936 A (STATE GRID CORPORATION OF CHINA et al.) 05 May 2020 (2020-05-05) description, paragraphs [0075]-[0187] | 1-13, 26-38, 51-52, 56-59 |
| X | CN 110120927 A (HUAWEI TECHNOLOGIES CO., LTD.) 13 August 2019 (2019-08-13) description, paragraphs [0351]-[0395] and [1326-1327] | 14-21, 39-46, 53-54, 56-59 |
| X | CN 115118486 A (ANT BLOCKCHAIN TECHNOLOGY (SHANGHAI) CO., LTD.) 27 September 2022 (2022-09-27) description, paragraphs [0030]-[0139] | 14-21, 39-46, 53-54, 56-59 |
| X | CN 114785515 A (INSTITUTE OF INFORMATION ENGINEERING, CHINESE ACADEMY OF SCIENCES) 22 July 2022 (2022-07-22) description, paragraphs [0055]-[0122] | 22-25, 47-50, 54-59 |

☑ Further documents are listed in the continuation of Box C. ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 May 2024** | **23 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/120490** |

| C. | DOCUMENTS CONSIDERED TO BE RELEVANT | |
|---|---|---|
| Category* | Citation of document, with indication, where appropriate, of the relevant passages | Relevant to claim No. |
| X | CN 111884815 A (SHANGHAI KOAL SAFETY TECHNOLOGY CO., LTD.) 03 November 2020 (2020-11-03)<br>description, paragraphs [0007]-[0028] | 22-25, 47-50, 54-59 |

Form PCT/ISA/210 (second sheet) (July 2022)

**INTERNATIONAL SEARCH REPORT**
**Information on patent family members**

International application No.

**PCT/CN2023/120490**

| Patent document cited in search report | | | Publication date (day/month/year) | Patent family member(s) | | | Publication date (day/month/year) |
|---|---|---|---|---|---|---|---|
| CN | 113645032 | A | 12 November 2021 | CN | 113645032 | B | 09 June 2023 |
| CN | 111106936 | A | 05 May 2020 | CN | 111106936 | B | 21 April 2023 |
| CN | 110120927 | A | 13 August 2019 | US | 2020366474 | A1 | 19 November 2020 |
| | | | | WO | 2019148832 | A1 | 08 August 2019 |
| CN | 115118486 | A | 27 September 2022 | | None | | |
| CN | 114785515 | A | 22 July 2022 | | None | | |
| CN | 111884815 | A | 03 November 2020 | | None | | |

Form PCT/ISA/210 (patent family annex) (July 2022)